(19) **Europäisches Patentamt**
**European Patent Office**
**Office européen des brevets**

(11) **EP 4 537 441 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **23733859.5**

(22) Anmeldetag: **05.06.2023**

(51) Internationale Patentklassifikation (IPC):
*H02K 3/04* (2006.01)   *H02K 3/12* (2006.01)
*H02K 3/28* (2006.01)   *H02K 16/02* (2006.01)
*H02K 21/12* (2006.01)   *H02K 21/14* (2006.01)
*H02K 21/22* (2006.01)

(52) Gemeinsame Patentklassifikation (CPC):
**H02K 3/12; H02K 3/28; H02K 16/02;** H02K 21/12;
H02K 21/14; H02K 21/22; H02K 2201/06

(86) Internationale Anmeldenummer:
**PCT/EP2023/064926**

(87) Internationale Veröffentlichungsnummer:
**WO 2023/237467 (14.12.2023 Gazette 2023/50)**

(54) **RADIALFLUSS-DOPPELROTORMASCHINE**

DOUBLE-ROTOR RADIAL-FLUX MACHINE

MACHINE À FLUX RADIAL À DOUBLE ROTOR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.06.2022   DE 102022205930**

(43) Veröffentlichungstag der Anmeldung:
**16.04.2025   Patentblatt 2025/16**

(73) Patentinhaber: **DeepDrive GmbH 85748 Garching bei München (DE)**

(72) Erfinder:
• **ROSEN, Alexander 49090 Osnabrück (DE)**
• **DOMME, Markus 80992 München (DE)**

(74) Vertreter: **Isarpatent Patent- und Rechtsanwälte Barth Hassa Peckmann & Partner mbB Friedrichstraße 31 80801 München (DE)**

(56) Entgegenhaltungen:
EP-A1- 2 528 206     WO-A1-2013/085124
JP-A- 2010 068 663   US-A1- 2018 083 518

**Beschreibung**

GEBIET DER ERFINDUNG

Die vorliegende Erfindung betrifft eine Radialfluss-Doppelrotormaschine, insbesondere für einen Radnabenantrieb.

TECHNISCHER HINTERGRUND

Elektromaschinen mit einem Stator und zwei rotationsfest miteinander verbundenen Läufern, sogenannte Doppelrotormaschinen, (neben Doppelrotor auch bezeichnet als Mehrfachrotor, Dual-Rotor, etc.) können sowohl die Drehmomentdichte als auch die Effizienz elektrischer Antriebe gegenüber herkömmlichen Elektromaschinen mit nur einem Rotor steigern. Das ist damit zu begründen, dass insbesondere in sogenannter "jochloser" Ausführung kein magnetischer Rückschluss im Stator erforderlich ist und hierdurch die Ummagnetisierungsverluste deutlich gesenkt werden können. Zudem steht bei zwei Rotoren grundsätzlich mehr Platz für die felderregenden Magnete (bei permanentmagneterregten Synchronmaschinen, PSM) bzw. das Leitermaterial (bei Induktionsmaschinen, IM oder elektrisch erregte Synchronmaschinen, ESM) zur Verfügung. Gemäß der Ausrichtung der magnetischen Feldlinien im Luftspalt können solche Maschinen in zwei Gruppen unterteilt werden, axial Fluss führend (Feldlinien parallel zur Rotationsachse, sog. Axialflussmaschinen) einerseits und radial Fluss führend (Feldlinien in radialer Richtung im Luftspalt, sog. Radialflussmaschinen) andererseits.

Axialfluss-Doppelrotormaschinen sind beispielsweise in der DE 10 2015 226 105 A1, EP 2 528 206 A1 und der DE 10 2013 206 593 A1 beschrieben. Sie zeichnen sich durch eine hohe Drehmoment- und Leistungsdichte aus, sind aber in der Fertigung aufwändig, weil im Statorkern sehr komplexe Geometrien gestanzt oder pulvermetallurgisch gefertigt werden müssen. Bisher haben solche Maschinen den Sprung in die Großserienanwendung daher nicht vollzogen und finden lediglich in Nischenbereichen mit hohen Anforderungen an die Leistungsdichte, wie beispielsweise Rennsport, Luftfahrt, etc. Anwendung. Zudem erlauben die mechanischen Befestigungskonzepte für die Statorwicklung nur den Einsatz von Einzelzahnwicklungen mit entsprechenden Nachteilen in Bezug auf Geräuschanregungen.

Demgegenüber können bei Radialfluss-Doppelrotormaschinen für Wicklung und Blechpaket prinzipiell etablierte und großserientaugliche Fertigungsverfahren angewendet werden. Allerdings besteht hierbei eine große und weitgehend ungelöste technische Herausforderung in der Abstützung des im Statorkern entstehenden Drehmoments. Aufgrund der innen und außen rotierenden Teile kann das Statorblechpaket nicht wie ansonsten üblich in ein feststehendes Gehäuse montiert (beispielsweise eingepresst, verschraubt oder geklebt) werden. Das Drehmoment wird deshalb zu den axialen Enden von Statorblechpaket bzw. Statorwicklung geführt und dort abgestützt. Im Stand der Technik werden dazu verschiedene Ansätze vorgeschlagen, die jedoch alle mit erheblichen Nachteilen in Bezug auf die Funktion und/oder die Kosten verbunden sind.

Die EP 1 879 283 B1 beschreibt eine Möglichkeit der Ausführung der Statorwicklung als sogenannte Jochwicklung. Das ringförmig ausgeführte Statorblechpaket weist hierbei Nuten am Innen- und Außendurchmesser auf, zwischen denen sich ein in tangentialer Richtung wirksamer magnetischer Rückschluss (auch als Statorjoch bezeichnet) befindet. Hin- und Rückleiter jedes Wicklungsstranges sind hierbei in jeweils radial übereinander liegenden Nuten geführt und um das Joch herumgewickelt. Zwischen den Wicklungssträngen ist das Statorjoch axial zugänglich und kann beispielsweise durch axiale Verschraubungen am Gehäuse fixiert werden (z.B. beschrieben in JP 2018 082 600). Durch die axiale Pressung der Schrauben wird sowohl eine Torsionssteifigkeit des Blechpaketes sowie die Drehmomentabstützung am axialen Ende gewährleistet. Nord- und Südpol des Rotorfelds stehen sich jeweils gegenüber. Nachteilig bei diesem Konzept ist, dass der magnetische Fluss vollständig über das zwischen den Statornuten liegende Rückschlussjoch geführt werden muss. Dies führt zum einen zu einem erhöhten Gewicht des Statorblechpakets und erhöht die Eisenverluste signifikant. Die magnetischen Feldlinien beider Rotorflüsse schließen sich über den magnetischen Rückfluss im Statorblechpaket und rufen dort Eisenverluste hervor. Zudem müssen alle Einzelspulen der Jochwicklung im Bereich des Wickelkopfes parallel oder in Reihe verschaltet werden, was wiederum zu einem Bauraumkonflikt mit der Drehmomentabstützung führt. Die um das Joch gewickelte Wicklung erlaubt aber eine direkte mechanische Kontaktierung des Statorblechpakets.

Eine deutliche Gewichts- und Verlusteinsparung kann erzielt werden, wenn die Magnetisierungsrichtungen der radial übereinander liegenden Magnete in die gleiche Richtung zeigen und die Bestromungsrichtungen der übereinander in den Nuten liegenden Leiter identisch sind. In diesem Fall kann der magnetische Rückschluss im Stator entfallen und es entsteht eine sogenannte "jochlose" Doppelrotormaschine mit verteilter Wicklung. Die magnetischen Feldlinien schließen sich über dem Rotor. Ein magnetischer Rückschluss im Stator ist nicht erforderlich, wodurch Gewicht und Eisenverluste in derartigen Maschinen sehr gering sind. Die verteilte Wicklung erlaubt aber keine direkte mechanische Kontaktierung des Statorblechpakets zur Drehmomentabstützung. Beispielsweise beschreibt die WO 2004/004098 A1 eine jochlose Ausführung mit verteilter Wicklung.

Zur axialen Abstützung werden im Stand der Technik verschiedene Hilfskonstruktionen zur Drehmomentabstützung vorgeschlagen, beispielweise beschrieben in der DE 10 2010 055 030 A1 oder US 7,557,486 B2. Problematisch ist hierbei, dass elektrisch und/oder magnetisch leitfähige Metalle nicht oder nur sehr eingeschränkt in den flussführenden Bereich hineinragen dürfen, was die Materialauswahl und geometrische Auslegung stark einschränkt. Demgegenüber können Kunststoffbauteile, Klebstoffe und/oder Vergussmaterialien auch im flussführenden Bereich eingesetzt werden. Mit solchen Materialien ist es aber sehr schwierig, die hohen Anforderungen hinsichtlich Temperaturstabilität und mechanischer Festigkeit zu erreichen.

ZUSAMMENFASSUNG DER ERFINDUNG

Vor diesem Hintergrund liegt der vorliegenden Erfindung die Aufgabe zugrunde, eine verbesserte Radialfluss-Doppelrotormaschine bereit zu stellen.

Erfindungsgemäß wird diese Aufgabe durch eine Radialfluss Doppelrotormaschine mit den Merkmalen des Patentanspruchs 1 gelöst.

Demgemäß ist vorgesehen:

- Eine Radialfluss-Doppelrotormaschine, insbesondere für einen Radnabenantrieb, mit einem Stator, der einen Statorkern und eine darin aufgenommene torsionssteife Wicklung aufweist, wobei in einem radial inneren Teil des Stators die Leiterstäbe der torsionssteifen Wicklung in einem ersten Drehsinn schraubenförmig verlaufen und in einem radial äußeren Teil des Stators die Leiterstäbe der torsionssteifen Wicklung in einem entgegengesetzten zweiten Drehsinn schraubenförmig verlaufen; mit einem Doppelrotor, der einen Innenrotor und einen Außenrotor aufweist, wobei der Innenrotor und der Außenrotor jeweils einen ringförmigen Grundkörper, der zur Flussführung ausgelegt ist, und eine gemeinsame Mittelachse aufweisen, wobei an dem ringförmigen Grundkörper jeweils eine Mehrzahl von Permanentmagneten befestigt und jedem Permanentmagnet im Querschnitt ein vorbestimmtes Winkelsegment des ringförmigen Grundkörpers zugeordnet ist, wobei die Permanentmagnete derart ausgebildet und an dem jeweiligen Grundkörper angeordnet sind, dass sich das Winkelsegment im axialen Verlauf in Umfangsrichtung verschiebt, so dass die Permanentmagnete ein zu der Mittelachse schräg verlaufendes Feld erzeugen, wobei ein Feld des Innenrotors in einer ersten Richtung schräg verläuft, die an dem ersten Drehsinn orientiert ist, und wobei ein Feld des Außenrotors in einer zweiten Richtung schräg verläuft, die an dem zweiten Drehsinn orientiert ist.

Eine der vorliegenden Erfindung zugrundeliegende Erkenntnis besteht darin, dass bei Radialfluss-Doppelrotormaschinen Feldverzerrungen aufgrund von Veränderungen des magnetischen Felds in axialer Richtung existieren können. Die volle Amplitude weist das magnetische Feld lediglich in der axialen Mitte der Maschine auf. Die axialen Enden der Maschine erfahren eine abgeschwächte Amplitude des Magnetfelds.

Eine weitere zugrundeliegende Erkenntnis besteht darin, dass die Feldverzerrung zu einer Verschiebung des Feldmaximums führt und es dadurch zu einer Reduzierung des Drehmoments kommt.

Die der vorliegenden Erfindung zugrundeliegende Idee besteht darin, eine Kombination aus einer speziellen elektrischen Synchronmaschine mit Doppelrotor, deren Stator einen Statorkern und eine darin aufgenommene torsionssteife Wicklung zur Drehmomentabstützung aufweist, und einer im axialen Verlauf in Umfangsrichtung verschobenen Anordnung von Permanentmagneten in den jeweiligen Rotoren zur Erzeugung eines schräg verlaufenden magnetischen Felds bereit zu stellen.

Die einzelnen Leiterstäbe der torsionssteifen Wicklung sind in axialer Richtung entlang einer Schraubenlinie der Statornuten und einem ersten und zweiten Drehsinn entsprechend der radial inneren und radial äußeren Statornuten angeordnet und an den Leiterenden verbunden. Vorzugsweise ist dazu eine stoffschlüssige Verbindung durch Schweißen oder Löten vorgesehen. Es wären aber auch andere Verbindungstechniken denkbar. Vorzugsweise sind jeweils zwei Leiterstäbe an den Leiterstabenden verbunden und alle Leiterstäbe gemeinsam bilden so ein Stabwerk. Die Wicklung ist somit aus miteinander, insbesondere stabwerkartig, verbundenen Leiterstäben gebildet. Das mit den Leiterstäben gebildete Stabwerk ist vorteilhaft in sich torsionssteif gestaltet und zur Momentenübertragung um die Mittelachse des Stators ausgelegt. Somit erhält die Wicklung einerseits ihre torsionssteife Form und wird zudem zur Drehmomentabstützung formschlüssig mit dem Statorkern verbunden.

Ferner sind die Leiterstäbe mit einer zur Kraftübertragung ausreichenden Dicke ausgebildet. Bei einem Radnabenmotor kann die Dicke der Leiterstäbe beispielsweise im Bereich mehrerer Millimeter ausgebildet sein. Es kann sich insbesondere um Stäbe mit Vierkantprofil handeln mit Kantenlängen von mehreren Millimetern.

Der gewählte Steigungswinkel (auch Schränkwinkel) der Statornuten bzw. der damit beschriebenen Schraubenlinien stellt sicher, dass mittels Verbindung der eingebrachten Leiterstäbe Leiterschleifen gebildet werden. Der in Bezug auf die Mittelachse überstrichene Winkel der Leiterschleifen in der Maschine umschließt jeweils einen magnetischen Pol der Rotoren. Auf diese Weise ist trotz der Funktionsintegration eine sehr einfache Herstellung des Stators ermöglicht, welche mit sehr wenigen Bauteilen und vergleichsweise einfacher herkömmlicher Verbindungstechnik und dadurch auch mit sehr wenigen Fertigungsschritten auskommt.

Der so ausgeführte Stator kann nun mit erfindungsgemäßen inneren und äußeren Rotoren zu einer erfindungsgemäßen elektrischen Maschine vervollständigt werden. Die torsionssteife Wicklung beinhaltet eine Aufteilung des Stators in einen radial inneren und äußeren Teil, wobei die Leiterstäbe der torsionssteifen Wicklung vom radial inneren Teil in einem ersten Drehsinn und die Leiterstäbe vom radial äußeren Teil in einem entgegengesetzten zweiten Drehsinn schraubenförmig angeordnet sind. Die entstehende fortlaufende (tangentiale) Verschiebung der Leiterstäbe über die axiale Position in der elektrischen Maschine führt dazu, dass das von der torsionssteifen Wicklung erzeugte Magnetfeld sich über die axiale Position in der Maschine ändert. Demzufolge weist das Magnetfeld die maximale Amplitude nur in der axialen Mitte der elektrischen Maschine auf, wo die Leiterstäbe gleichen Stranges und gleicher Stromrichtung übereinanderstehen. Aufgrund der zugrundeliegenden Geometrie reduziert sich die Amplitude des Magnetfelds zu den beiden axialen Enden der elektrischen Maschine hin. Für den resultierenden Verkettungsfluss und das Drehmoment der elektrischen Maschine ist der Mittelwert über die gesamte Länge von besonderer Relevanz.

Neben der Reduzierung der Amplitude des Magnetfelds entsteht an den axialen Enden der elektrischen Maschine durch die rotatorische Verschiebung der Leiterstäbe zueinander auch eine Verzerrung des Magnetfelds in tangentialer Richtung, die zu einer tangentialen Verschiebung des Maximums des Magnetfelds führt. Diese Verzerrung des Magnetfelds würde mit einer herkömmlichen Anordnung der Permanentmagnete zu einer Reduzierung des Drehmoments führen, weil die Permanentmagnete in den Rotoren nicht mehr in der jeweils für die Drehmomenterzeugung optimalen Position liegen.

Erfindungsgemäß wird daher der Drehmomentreduzierung aufgrund der Verzerrung des Magnetfelds durch eine neuartige Anordnung der Permanentmagnete entgegengewirkt. Hierfür werden die Permanentmagnete der jeweiligen Rotoren im axialen Verlauf in Umfangsrichtung verschoben, um dadurch schräg verlaufende Magnetfelder zu erzeugen. Die erzeugten entgegengesetzt schräg verlaufenden Felder des Innenrotors und Außenrotors verlaufen in zwei gegenläufigen schrägen Richtungen, die den jeweils dazu korrespondierenden und zueinander entgegengesetzten Drehsinnen der Leiterstäbe der torsionssteifen Wicklung entsprechen. Vorteilhaft wirkt sich die erfindungsgemäße axiale Verschiebung der Permanentmagnete in Umfangsrichtung positiv auf das erzeugte Drehmoment aus und ermöglicht insbesondere eine Drehmomentsteigerung von bis zu 10% gegenüber einer nicht geschrägten Anordnung der Permanentmagnete in den Innen- und Außenrotoren.

Die Rotoren sind vorzugsweise aus weichmagnetischem Vollmaterial und mit oberflächenmontierten Permanentmagneten ausgeführt. Das geringe Oberfeldspektrum der hier beschriebenen Wicklungsvarianten und der durch die Magnete gewährleistete Abstand des Vollmaterials vom Luftspalt verhindert das Entstehen unzulässig großer Verluste durch Wirbelströme in den Rotoren. In dieser Ausführung können dann vorteilhaft vergleichsweise hohe Wirkungsgrade erreicht werden und die Rotoren dennoch sehr kostengünstig gefertigt werden.

Eine Trägereinrichtung des Stators, die insbesondere mit der torsionssteifen Wicklung in Eingriff steht, wird durch eine geeignete Methode fest mit der Basis als dem stehenden Teil der elektrischen Maschine verbunden. Eine mögliche Ausführung sieht dazu Ausnehmungen, beispielsweise Durchgangsbohrungen, für kraftschlüssige Befestigungsmittel, wie beispielsweise Schrauben, vor. Es wären aber selbstverständlich alternativ oder zusätzlich auch formschlüssige Verbindungsmittel und/oder eine stoffschlüssige Verbindung denkbar.

Insbesondere ist die vorliegende Erfindung besonders vorteilhaft für einen Radnabenmotor, bevorzugt für ein Kraftfahrzeug, einsetzbar. Durch die erfindungsgemäße Konstruktion lässt sich aufgrund der Funktionsintegration die Masse einer Radialfluss-Doppelrotormaschine verringern und die Drehmomentdichte erhöhen, was insbesondere bei Radnabenmotoren vorteilhaft eine Reduzierung ungefederter Massen bedeutet. Ferner kann erfindungsgemäß bei vergleichsweise hohem Durchmesser eine vergleichsweise kurze axiale Länge realisiert werden, was insbesondere im Radinneren bezüglich der Drehmomentabstützung und des Bauraums vorteilhaft ist.

Andererseits sind erfindungsgemäß trotz der äußerst kompakten Bauweise auch sehr hohe Drehmomente möglich, welche insbesondere hoch genug sind um ohne ein Getriebe direkt ein Rad eines Fahrzeugs anzutreiben. Auf diese Weise werden besonders vorteilhaft Getriebeverluste vermieden, weiteres Gewicht eingespart und es sind besonders hohe Wirkungsgradvorteile erzielbar.

Weiterhin erlaubt dieses hohe Drehmoment, welches bei Baugrößen innerhalb der Dimensionen üblicher Kraftfahrzeugfelgen bereits deutlich vierstellig, insbesondere größer als 1000 Nm, vorzugsweise größer als 1500 Nm, besonders bevorzugt größer als 5000 Nm, möglich ist, und so bereits in den Bereich der Haftungsgrenze von üblichen Straßenreifen reicht, sogar eine Hinterachsen-Radbremse durch den Radnabenmotor zu ersetzen. Es sind somit bei der Anwendung als Radnabenmotor besondere Synergien bzw. Funktionsintegrationen ermöglicht.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Ausführungsform ist der ringförmige Grundkörper aus Vollmaterial gefertigt. Die torsionssteife Wicklung bietet erstmals die Möglichkeit, die Wicklung einer Synchronmaschine mit Doppelrotor, als verteilte Wicklung mit entsprechend geringem Oberfeldspektrum auszuführen. Nur in dieser Ausführung können die Rotoren aus Massiv- bzw. Vollmaterial gefertigt werden, da von der Wicklung nur geringe Oberfelder und resultierende Wirbelströme im Rotor erzeugt werden. Dementsprechend können bei einer Fertigung der Innen- und Außenrotoren aus einem weichmagnetischem Vollmaterial aufgrund der vereinfachten Fertigung kosten gespart werden und es kann ein hoher Wirkungsgrad erreicht werden.

Gemäß einer weiteren Ausführungsform sind die Permanentmagnete in einem vorbestimmten Schrägungswinkel relativ zu der axialen Richtung der Mittelachse auf dem ringförmigen Grundkörper angeordnet. Auf diese Weise wird es ermöglicht, das von den Permanentmagneten erzeugte Magnetfeld relativ zur Mittelachse der ringförmigen Grundkörper gezielt auszurichten und so das gewünschte schräge Magnetfeld zu erzeugen. Der Schrägungswinkel ist frei einstellbar, da er im Wesentlichen durch die tatsächliche Positionierung und/oder Ausrichtung der Permanentmagnete beeinflusst wird. Auf diese Weise kann vorteilhaft einer Drehmomentreduzierung aufgrund von einer Feldverzerrung mittels der gezielten Einstellung des vorbestimmten Schrägungswinkels entgegengewirkt werden.

Gemäß einer weiteren Ausführungsform sind die Permanentmagnete jeweils in mehrere axiale Segmente geteilt ausgebildet. Jedem axialen Segment ist ein zu einem benachbarten axialen Segment um einen Anstellwinkel um die Mittelachse verschobenes Winkelsegment zugeordnet. Ein resultierender Gesamtschrägungswinkel um die Mittelachse bzw. in Umfangsrichtung ergibt sich aus dem Anstellwinkel, insbesondere aus einem Mehrfachen des Anstellwinkels. Ferner können die axialen Segmente mit einer Kante parallel zur Mittelachse der ringförmigen Grundkörper ausgerichtet sein. Die Anzahl der axialen Segmente und der Anstellwinkel der einzelnen axialen Segmente zueinander sind frei wählbar. Auf diese Weise wird eine Radialfluss-Doppelrotormaschine bereitgestellt, die in Bezug auf Fertigungskosten und Feldoptimierung konfiguriert werden kann.

Gemäß einer weiteren Ausführungsform ergibt sich bei einer vorbestimmten Anzahl von n axialen Segmenten pro Permanentmagnet der resultierende Gesamtschrägungswinkel $\phi$ aus dem Anstellwinkel $\theta$ mit der Beziehung, $\phi = n * \theta$. Aufgrund der mathematisch simplen Beziehung zwischen der Anzahl von axialen Segmenten pro Permanentmagnet und dem Anstellwinkel können die einzelnen Parameter der Magnetanordnung des Rotors einer erfindungsgemäßen Radialfluss-Doppelrotormaschine auf einfache Weise berechnet und leicht umgesetzt werden. Somit lässt sich die Radialfluss-Doppelrotormaschine für unterschiedliche Anforderungen leicht anpassen bzw. entsprechend auslegen.

Gemäß einer weiteren Ausführungsform sind die Permanentmagnete jeweils in zwei axiale Segmente geteilt ausgebildet. Auf diese Weise wird eine einfach zu fertigende und somit in Bezug auf die Herstellungskosten besonders vorteilhafte Variante der erfindungsgemäßen Radialfluss-Doppelrotormaschine bereitgestellt. Aufgrund der immer noch niedrigen Anzahl von axialen Segmenten bleiben die Ausrichtung und Montage der Segmente vergleichsweise einfach, jedoch wird das im Betrieb erreichbare Drehmoment signifikant gesteigert.

Gemäß einer weiteren Ausführungsform sind die Permanentmagnete mit einer Kante entlang des vorbestimmten Schrägungswinkels ausgerichtet. Demnach wird eine Radialfluss-Doppelrotormaschine bereitgestellt, die auch mit einteiligen Permanentmagneten anforderungsgerecht bezüglich des vorbestimmten Schrägungswinkels eingestellt und ausgelegt werden kann. Sofern die Permanentmagnete ebene Flächen aufweisen entsteht aufgrund der schrägen Anordnung der Permanentmagnete an der inneren oder äußeren Mantelfläche der jeweiligen ringförmigen Grundkörper geometriebedingt abschnittsweise ein geringfügiger Spalt zwischen dem Permanentmagnet und dem Grundkörper. Dieser Spalt wird vorzugsweise im Falle einer stoffschlüssigen Verbindung der Permanentmagnete am ringförmigen Grundkörper mit dem Stoffschlussmedium gefüllt. Die stoffschlüssige Verbindung kann beispielsweise mittels eines geeigneten Klebers realisiert sein.

Gemäß einer weiteren Ausführungsform weisen die Permanentmagnete eine schräge Parallelogrammform auf. Die parallelogrammförmigen Permanentmagnete besitzen ebenfalls einen, insbesondere den gleichen, resultierenden Gesamtschrägungswinkel in Umfangsrichtung. Auf diese Weise kann ein Freilassen der Oberfläche oder Überstehen über die Oberfläche der ringförmigen Grundkörper durch die Permanentmagnete aufgrund der Parallelogrammform vermieden werden. Es kommt demnach zu einer optimalen Ausnutzung der Fläche der ringförmigen Grundkörper. Aufgrund der Anordnung der parallelogramförmigen Permanentmagneten in/auf den ringförmigen Grundkörper entsteht geometriebedingt ebenfalls ein Spalt. Dieser Spalt lässt sich jedoch beispielsweise im Falle bei einer stoffschlüssigen Verbindung der Permanentmagnete am ringförmigen Grundkörper mit dem Stoffschlussmedium füllen. Die stoffschlüssige Verbindung kann beispielsweise mittels eines geeigneten Klebers realisiert sein.

Gemäß einer weiteren Ausführungsform können die Permanentmagnete auch als Rechtecke, insbesondere schmale Rechtecke, ausgebildet sein. Die jeweiligen Ecken der Permanentmagneten können dabei eine vergleichsweise kleine Fläche auf dem jeweiligen ringförmigen Grundkörper freilassen oder mit der Ecke darüber überstehen. Da die Dimensionierung der Permanentmagnete, insbesondere deren breite, wählbar ist, kann auf diese Weise auch die freigelassene oder überstehende Fläche eingestellt werden. Demnach wird eine Radialfluss-Doppelrotormaschine bereitgestellt, die auf einfach Weise anforderungsgerecht ausgelegt werden kann. Es sind bei weiteren Ausführungsformen auch weitere Ausrichtungen der Permanentmagneten denkbar, die zu dem gewünschten schrägen Feld führen.

Gemäß einer Ausführungsform ist die Wicklung derart torsionssteif ausgelegt, dass ein im Betrieb einer Radialfluss-Doppelrotormaschine auf den Statorkern wirkendes Drehmoment über die torsionssteife Wicklung an dem Trägerelement, insbesondere vollständig, abstützbar ist. Auf diese Weise können vorteilhaft sämtliche andersartige Kraftabstützungseinrichtungen, insbesondere für den Statorkern, entfallen.

Gemäß einer weiteren Ausführungsform weist die Wicklung in dem radial inneren Teil des Stators eine radial innere Lage von schraubenförmig angeordneten Leiterstäben und in dem radial äußeren Teil des eine radial äußere Lage von entgegengesetzt schraubenförmig angeordneten Leiterstäben auf. Auf diese Weise wird durch die Wicklung ein Stabwerk gebildet, welches eine hohe Torsionssteifigkeit aufweist. Die Leiterstäbe des radial inneren Teils des Stators und die Leiterstäbe des radial äußeren Teils des Stators beschreiben dabei jeweils eine Schraubenlinie, deren Windungsrichtungen bzw. Steigungen entgegengesetzt zueinander sind. Ein in Bezug auf die Mittelachse des Stators überstrichener Winkel der Schraubenlinie zwischen Beginn und Ende eines Leiterstabs ist insbesondere derart ausgebildet, dass in einer Radialfluss-Doppelrotormaschine eine Leiterschleife pro Pol der Rotoren gebildet ist. Der vorzusehende überstrichene Winkel lässt sich somit aus dem Quotienten aus einer ganzen Umdrehung ($2\pi$ oder 360°) und der doppelten Polpaarzahl $p$ errechnen.

Gemäß einer Ausführungsform weist die radial innere Lage und die radial äußere Lage der Wicklung jeweils die Stärke eines einzelnen Leiterstabes auf. Das heißt, eine Phase der Wicklung ist jeweils mit dem Querschnitt eines einzelnen Leiterstabs gebildet. Eine derartige erfindungsgemäße Ausbildung einer Wicklung ist unter anderem durch die spezielle Bauweise der Radialfluss-Doppelrotormaschine ermöglicht, welche die bei Leitern ansonsten vorhandene Stromverdrängung zur Oberfläche mittels ihrer magnetischen Symmetrie unterbindet. Auf diese Weise sind vergleichsweise dicke Leiterquerschnitte ermöglicht und es wird dennoch eine relativ gleichmäßige Stromverteilung über den Querschnitt erreicht. Beispielsweise kann die Dicke der Leiterstäbe im Bereich mehrerer Millimeter ausgebildet sein. Es kann sich insbesondere um Stäbe mit Vierkantprofil handeln mit Kantenlängen von mehreren Millimetern, beispielsweise im Bereich von 2 mm bis 6 mm, insbesondere im Bereich von 3 mm bis 5 mm. Andere Querschnittsformen sind ebenfalls möglich.

Gemäß einer Ausführungsform sind die Leiterstäbe entsprechend dem schraubenförmigen Verlauf jeweils derart tordiert ausgebildet, dass ein Querschnitt eines Leiterstabes bezogen auf eine radiale Achse des Querschnitts an jeder Stelle des Leiters gleich ist. Insbesondere handelt es sich um eine Torsion eines, insbesondere nichtrunden, Leiterstabs um die Mittelachse des Stators beziehungsweise der Maschine. Je nach Verlauf der Schraubenform können die Leiterstäbe zusätzlich auch gebogen sein. Die innere und die äußere Lage sind dabei zueinander verschränkt, das heißt entgegengesetzt verdreht, tordiert und gegebenenfalls gebogen, angeordnet. Auf diese Weise ist die Ausrichtung eines Leiterstabs unter mechanischen Gesichtspunkten an jeder Stelle des Statorkerns ideal zur Kraftübertragung mit dem Statorkern ausgerichtet, sodass der jeweilige Leiterstab über seine Länge gleichmäßig belastet wird. In dem entstehenden Stabwerk nehmen die Leiterstäbe bei Beaufschlagung mit Tangentialkraft somit vorteilhaft vorwiegend Zug- und Druckspannungen auf. Auf diese Weise werden Lastspitzen und Verformungen der Leiterstäbe vermieden. Insbesondere gegenüber einer Ausführung mit achsparallelen, geraden Leitern können die mechanischen Spannungen somit signifikant gesenkt werden.

Gemäß einer Ausführungsform sind die einer gleichen Phase der Wicklung zugehörigen Leiterstäbe der radial inneren und äußeren Lage jeweils an den Leiterstabenden miteinander verbunden, insbesondere über ein radial angeordnetes Leiterstabstück und/oder mittels stoffschlüssiger Verbindung. Hierdurch entsteht neben einer Leiterschlaufe auch eine torsionssteife stabwerkartige Struktur, so dass bei Fixierung eines axial zugänglichen Wicklungsendes ein hohes Drehmoment von der Wicklung aufgenommen werden kann, ohne unzulässig große Verformungen und/oder Spannungszustände hervorzurufen. Somit ist nur durch den Wicklungswerkstoff, beispielsweise Kupfer, ohne zusätzliche Trägermittel oder -elemente die selbsttragende Ausführung der Wicklung ermöglicht.

Gemäß einer weiteren Ausführungsform enthält der Statorkern ein Statorblechpaket mit dem Wicklungsverlauf entsprechend schraubenförmig verlaufenden Statornuten, wobei innere Statornuten des radial inneren Teils des Stators gemäß dem ersten Drehsinn und äußere Statornuten des radial äußeren Teils des Stators gemäß dem zweiten Drehsinn zueinander gegensätzlich verlaufen. Die Wicklung bzw. das damit gebildete selbsttragende Stabwerk ist in dem Statorblechpaket eingebettet. Analog zu den Leiterstäben der Wicklung ändern die Statornuten in Abhängigkeit von der axialen Position ihre tangentiale Lage, sodass die Schraubenform entsteht. Die Richtung der Lageänderung folgt dabei den Leiterstäben, d.h. die Mittellinie der radial außenliegenden Nuten und der radial innenliegenden Nuten beschreiben ebenfalls jeweils eine Schraubenlinie, deren Windungsrichtungen entgegengesetzt sind und dem ersten bzw. zweite Drehsinn entsprechen.

Bei weiteren Ausführungsformen wären auch andere dem Fachmann bekannte Herstellungsarten zur Herstellung der erfindungsgemäßen Statorkerngeometrie mit den entgegengesetzt schraubenförmig verlaufenden radial inneren und äußeren Statornuten denkbar, insbesondere auch additive Herstellungsarten, wie Sinterverfahren oder dergleichen.

Gemäß einer Ausführungsform ist in jeder Statornut des Statorblechpakets nur ein einziger Leiterstab platziert. Wie bereits in Bezug auf die Wicklung erläutert, sind die Leiterstäbe der innen und außenliegenden Statornuten durch Torsion um die Mittelachse der Maschine schraubenförmig gegeneinander verschränkt, so dass die Leiterenden der inneren und äußeren Lage zueinander geführt sind. An den Leiterstabenden sind die Leiterstäbe leitend miteinander verbunden, insbesondere über ein radial angeordnetes Leiterstabstück und/oder mittels stoffschlüssiger Verbindung, beispielsweise durch Schweißen oder Hartlöten.

Gemäß einer Ausführungsform bilden die leitfähig verbundenen Leiterstäbe der inneren und äußeren Lage gemeinsam wellenförmige Wicklungsstränge. Die Wicklungsstränge lassen sich durch entsprechende, dem Fachmann bekannte, Verschaltungen zu einer drehfelderzeugenden Wicklung mit einer gewünschten bzw. anpassbaren Strangzahl verschalten. Die spannungshaltende Strangwindungszahl ergibt sich unmittelbar aus dem Quotienten der Anzahl der Nuten im Zähler und einem Produkt der Strangzahl und der Anzahl paralleler Zweige im Zähler. Vorteilhafterweise wird die Anzahl paralleler Zweige zu 1 gewählt. In diesem Fall ergibt sich die einfachst mögliche Verschaltung der Wicklung.

Gemäß einer Ausführungsform sind die Statorbleche des Statorblechpakets mit zur Ausbildung der Statornuten vorgesehenen Ausnehmungen jeweils gleich ausgebildet. Der schraubenförmige Verlauf der Statornuten ist dabei mittels einer zueinander verdrehten Stapelung der Statorbleche vorgesehen. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zueinander um einen vorbestimmten Winkel um die Mittelachse verdreht, sodass die Ausnehmungen in einer Überlappung zueinander angeordnet sind, welche dem Schraubenlinienverlauf entspricht.

Gemäß einer weiteren Ausführungsform enthält das Statorblechpaket ein inneres Teilpaket mit radial inneren Statornuten und ein äußeres Teilpaket mit radial äußeren Statornuten, wobei die Statorbleche des inneren Teilpakets mit einer jeweils gleichen Geometrie und die Statorbleche des äußeren Teilpakets mit einer jeweils gleichen Geometrie ausgeführt sind. Zusätzlich sind die Statorbleche des inneren Teilpakets gemäß dem ersten Drehsinn der Leiterstäbe und die Statorbleche des äußeren Teilpakets gemäß dem zweiten Drehsinn der Leiterstäbe zueinander gegensätzlich um einen vorbestimmten Verdrehwinkel um die Mittelachse zueinander verdreht gestapelt sind. In einer weiteren Ausführungsform ist der Verdrehwinkel der Statorbleche um die Mittelachse gleich wie der überstrichenen Winkel der Statornuten. Auf diese Weise lassen sich mit geringem Fertigungsaufwand die entgegengesetzten Schraubenlinien der Statornuten realisieren. Dennoch ist eine nach wie vor sehr wirtschaftliche Fertigungsweise ermöglicht, da für alle parallel angeordneten bzw. gestapelten Statorbleche des inneren Teilpakets die gleiche Stanzform eingesetzt werden kann und für alle parallel angeordneten bzw. gestapelten Statorbleche des äußeren Teilpakets die gleiche Stanzform eingesetzt werden kann. Dementsprechend sind zwei benachbarte Statorbleche des inneren Teilpaktes in einen ersten Drehsinn leicht zu einander um einen vorbestimmten Verdrehwinkel um die Mittelachse verdreht und zwei benachbarte Statorbleche des äußeren Teilpaktes in einem zweiten entgegengesetzten Drehsinn leicht zu einander um einen vorbestimmten Verdrehwinkel um die Mittelachse verdreht. Auf diese Weise sind die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht.

Gemäß einer Ausführungsform sind die Statorbleche des Statorblechpakets mit zur Ausbildung der Statornuten vorgesehenen Ausnehmungen jeweils gleich ausgebildet. Der schraubenförmige Verlauf der Statornuten ist dabei mittels einer zueinander verdrehten Stapelung der Statorbleche vorgesehen. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht.

Gemäß einer weiteren Ausführungsform sind die Statorbleche mit zur Ausbildung der Statornuten vorgesehenen Ausnehmungen jeweils unterschiedlich ausgebildet. Der schraubenförmige Verlauf der Statornuten ist dabei mittels unterschiedlicher Abstände der Ausnehmungen in den einzelnen Statorblechen vorgesehen. Insofern wird hierbei für jede Position eines Statorblechs innerhalb des Stapels eine individuell passende Statorblechform hergestellt, wobei innerhalb des Stapels sich die einzelnen Geometrien auch wiederholen können. Die Herstellung kann in diesem Fall beispielsweise mittels eines hinsichtlich der Form im Vergleich zu einem Stanzprozess flexibleren Strahlschneidprozesses, insbesondere Laserstrahlschneidprozess, realisiert werden. Ebenfalls denkbar wären flexible Stanzformen mit veränderlicher Geometrie oder bei sehr hoher Stückzahl selbstverständlich auch mehrere individuelle Stanzformen für jede der unterschiedlichen Statorblechformen.

Gemäß einer Weiterbildung sind die Ausnehmungen für radial innere und radial äußere Statornuten jeweils in einem gemeinsamen Statorblech integriert ausgebildet, wobei der entgegengesetzt schraubenförmige Verlauf der radial inneren und radial äußeren Statornuten durch eine fortwährende Verschiebung der inneren und äußeren Statornuten zueinander von Statorblech zu Statorblech vorgesehen ist. Auch hierbei wird für jede Position eines Statorblechs innerhalb des Stapels eine individuell passende Statorblechform hergestellt, wobei innerhalb des Stapels sich die einzelnen Geometrien auch wiederholen können. Auch hier wird zu Herstellung insbesondere auf flexible Trennprozesse, wie beispielsweise Laserstrahlschneiden, zurückgegriffen. Durch die so mögliche einteilige Herstellung der inneren und äußeren Ausnehmungen wird vorteilhaft die Anzahl der Teile reduziert.

Gemäß einer Ausführungsform weisen die Statorbleche gerade, insbesondere gestanzte, Kanten auf. Eine Breite der für die Statornuten vorgesehenen Ausnehmungen ist dabei um einen durch die Steigung der Schraubenform des Verlaufs der Statornuten und durch die Blechstärke der Statorbleche vorbestimmten Betrag größer als die Breite der Leiterstäbe ausgebildet. Eine durch den Versatz zwischen den Ausnehmungen der Statorbleche verringerte lichte Breite bzw. durchgängige Breite der Statornuten entspricht somit im Wesentlichen der Breite eines Leiterstabs. In der Praxis ist die durchgängige lichte Breite der Statornut zur Bereitstellung einer zum Einführen der Leiterstäbe notwendigen Spielpassung geringfügig größer als die Breite des Leiterstabs vorgesehen. Der Rand einer Statornut beschreibt somit eine Treppenform mit der jeweiligen Blechstärke als Stufen, an welcher sich der Leiterstab gleichmäßig abstützt. Auf diese Weise wird die Drehmomentabstützung gleichmäßig über die gesamte Dicke des Statorblechpakets bzw. über die gesamte in dem Statorblechpaket aufgenommene Länge der Leiterstäbe ermöglicht.

Gemäß einer Ausführungsform ist ein von den Statornuten jeweils überstrichener Winkel kleiner als ein von den Leiterstäben jeweils überstrichener Winkel. Der überstrichene Winkel bezieht sich jeweils auf eine Drehung um die Mittelachse des Stators. Der Unterschied der überstrichenen Winkel kommt dadurch zustande, dass die Leiterstäbe axial über den Statorkern hinausstehen und somit länger ausgebildet sind als die Statornuten. Da sich der schraubenförmige Verlauf ebenfalls fortsetzt, ergibt sich ein größerer dadurch überstrichener Winkel. Der besagte Unterschied ist vorgesehen, damit eine ausreichende Zugänglichkeit der Wicklungsenden zum Verbinden, insbesondere Verschweißen, der Leiterstabenden nach dem Einführen in die Statornuten gewährleistet ist. Ferner ist auf diese Weise ein axial zu dem Statorkern versetztes Eingreifen der Wicklung mit der Trägereinrichtung bzw. deren Trägerelement ermöglicht.

Aus dem Quotienten der überstrichenen Winkel, also einem Verhältnis des von den Statornuten jeweils überstrichenen Winkels zu dem von den Leiterstäben jeweils überstrichenen Winkel, lässt sich ein sogenannter Polbedeckungsgrad für das Statorblechpaket definieren.

Gemäß einer Ausführungsform liegt ein Verhältnis des von den Statornuten jeweils überstrichenen Winkels zu dem von den Leiterstäben jeweils überstrichenen Winkel in einem Bereich zwischen 0,6 und 0,8, insbesondere zwischen 0,6 und 0,75, vorzugsweise zwischen 0,6 und 0,7. Dieses Verhältnis (Polbedeckungsgrad) stellt in diesem Bereich ein Optimum zwischen durch Stromwärme entstehenden Verlusten und Drehmomentausnutzung bereit.

Gemäß einer Ausführungsform ragt die Wicklung an zumindest einem axialen Ende über den Statorkern hinaus. Ferner ist eine axial zu dem Statorkern axial versetzt angeordnete Trägereinrichtung vorgesehen, welche zum formschlüssigen Eingriff mit der Wicklung an dem zumindest einen axialen Ende zur Drehmomentabstützung ausgebildet ist.

Gemäß einer vorteilhaften Weiterbildung weist die Trägereinrichtung ein Trägerelement auf, in welchem zu der schraubenförmigen Anordnung der Leiterstäbe korrespondierende und mit den Leiterstäben in Eingriff stehende Trägernuten vorgesehen sind. Auf diese Weise wird für die Abstützung des Drehmoments am axialen Ende eine formschlüssige Einbettung der Leiterstäbe in das Trägerelement vorgesehen. Vorzugsweise besteht ein Eingriff mit allen Leiterstäben, sodass die Drehmomentabstützung homogen bzw. gleichmäßig über das gesamte Stabwerk der Wicklung abgetragen wird.

Zur Übertragung des Drehmoments ist das Trägerelement mit einer mechanisch festgelegten Basis einer Radialfluss-Doppelrotormaschine koppelbar. Eine mögliche Ausführung sieht dazu Durchgangsbohrungen für kraftschlüssige Befestigungsmittel wie Schrauben vor, es wären aber selbstverständlich auch formschlüssige Verbindungsmittel oder eine stoffschlüssige Verbindung denkbar.

Gemäß einer Ausführungsform folgen die Trägernuten zumindest abschnittsweise dem schraubenförmigen Verlauf der tordierten Leiterstäbe. Insbesondere Weisen die Trägernuten einen gleichermaßen tordierten Verlauf wie die Leiterstäbe auf. Beispielsweise ist das Trägerelement im Wesentlichen ringförmig ausgebildet und weist Ausnehmungen an dem inneren und/oder äußeren Umfang auf, welche radial ausgerichtet sind und dem Verlauf der Leiterstäbe entsprechen.

Gemäß einer Ausführungsform weist die Trägereinrichtung ein radial inneres Trägerelement zum Eingriff mit der radial inneren Lage der Leiterstäbe und ein radial äußeres Trägerelement zum Eingriff mit der radial äußeren Lage der Leiterstäbe auf. Bei dieser Ausführungsform können die Trägerelemente ringförmig ausgebildet sein, wobei das innere Trägerelement an seinem äußeren Umfang dem Verlauf der inneren Lage der Leiterstäbe entsprechende Nuten bzw. Zähne zur formschlüssigen Aufnahme der radial inneren Leiterstäbe und das äußere Trägerelement an seinem inneren Umfang dem Verlauf der äußeren Lage der Leiterstäbe entsprechende Nuten bzw. Zähne zur formschlüssigen Aufnahme der radial äußeren Leiterstäbe aufweist. Die Nuten bzw. Zähne folgen dabei insbesondere dem jeweiligen schraubenförmigen Verlauf. Durch die Anordnung am inneren oder äußeren Umfang sind die eingelassenen Nuten für eine mechanische Bearbeitung gut zugänglich, was die Herstellung der Trägerelemente vereinfacht.

Gemäß einer weiteren Ausführungsform beträgt der resultierende Gesamtschrägungswinkel in Umfangsrichtung der Permanentmagnete des Innenrotors in einem Bereich von 20% bis 40%, bevorzugt 25% bis 35%, besonders bevorzugt 28% bis 32% des Verdrehwinkels der Statorbleche des inneren Teilpakets und/oder beträgt der resultierende Gesamtschrägungswinkel in Umfangsrichtung der Permanentmagnete des Außenrotors in einem Bereich von 20% bis 40%, bevorzugt 25% bis 35%, besonders bevorzugt 28% bis 32 des Verdrehwinkels der Statorbleche des äußeren Teilpakets. Aufgrund dessen, dass die Feldverzerrung nicht in voller Ausprägung dem Verlauf der Statornuten der jeweiligen Statorbleche folgt, ist der resultierende Gesamtschrägungswinkel der Permanentmagnete des Innen- und Außenrotors kleiner als der Verdrehwinkel der Statorbleche. Auf diese Weise wird eine besonders vorteilhafte Ausführung bereitgestellt, die aufgrund des Verhältnisses zwischen Verdrehwinkel der Statorbleche und dem resultierenden Gesamtschrägungswinkel der Permanentmagneten eine optimierte Drehmomentsteigerung bewirkt.

Gemäß einer weiteren Ausführungsform weisen die Permanentmagnete des Innenrotors und des Außenrotors eine vorbestimmte tangentiale Breite auf, wobei der Statorkern eine radiale Jochdicke aufweist, welche im Bereich von 5% bis 25%, bevorzugt 10% bis 20%, besonders bevorzugt 12,5 % bis 17,5% einer tangentialen Polbreite beträgt. Die tangentiale Polbreite ist insbesondere eine lokale tangentiale Polbreite und stellt vorzugsweise die gemeinsame tangentiale Breite aller Permanentmagneten eines Pols dar. Ferner ergibt sich eine maximale tangentiale Polbreite im Querschnitt der Maschine rechnerisch aus einem Quotienten aus dem Radius der Maschine multipliziert mit einer ganzen Umdrehung ($2\pi$ oder 360°) und der doppelten Polpaarzahl $p$. Die radiale Jochdicke des Statorkerns kann vergrößert werden, um eine gewisse tangentiale Flussführung an den Enden der Radialfluss-Doppelrotormaschine zu unterstützen und so den magnetischen Widerstand zu reduzieren. Die eingesetzte radial Jochdicke des Stators kann somit gegenüber herkömmlichen jochlosen Ausführungen leicht erhöht ausgebildet sein, jedoch ohne das Gewicht des Ständerblechpakets signifikant zu erhöhen.

Gemäß einer Ausführungsform ist der Statorkern dennoch vorrangig zur Führung eines radialen Magnetflusses ausgebildet. Es handelt sich somit dennoch um eine sogenannte "jochlose" Ausführung des Statorkerns, die insbesondere im axialen Zentrum der Maschine keine signifikante Magnetflussführung in umfänglicher bzw. tangentialer Richtung aufweist.

Gemäß einer Ausführungsform einer Radialfluss-Doppelrotormaschine sind die Trägerelemente an der Basis fixiert und führen das Drehmoment so zum festen Teil der elektrischen Maschine. Die Trägerelemente können dazu einzeln mit der Basis, beispielsweise einem Gehäuse, der Maschine befestigt sein. Alternativ oder zusätzlich können auch die inneren und äußeren Trägerelemente miteinander befestigt sein.

Gemäß einer Ausführungsform eines Stators enthält die Trägereinrichtung einen wärmeleitenden Werkstoff, insbesondere ein Metall, vorzugsweise eine Aluminiumlegierung. Insbesondere können beide Trägerelemente einen solchen Werkstoff enthalten. Auf diese Weise wird neben einer hohen mechanischen Festigkeit auch eine Wärmeabfuhr aus der Wicklung über die Trägereinrichtung ermöglicht.

Gemäß einer Ausführungsform einer entsprechenden Radialfluss-Doppelrotormaschine mit einer einen wärmeleitenden Werkstoff enthaltenden Trägereinrichtung weist zusätzlich die Basis einen Kühlkörper auf, der zur Aufnahme von über die Trägereinrichtung aus dem Stator, insbesondere aus der Wicklung, abgeführter Wärme ausgebildet ist. Hierdurch weist die Trägereinrichtung eine hohe mechanische Festigkeit auf und gewährleistet gleichzeitig eine gute thermische Anbindung der Wicklung an den Kühlkörper. Beispielsweise kann das Gehäuse der Maschine als Kühlkörper dienen. Alternativ oder zusätzlich kann die Trägereinrichtung, vorzugsweise die inneren und äußeren Trägerelemente, in thermischem Kontakt mit einem aktiv gekühlten Kühlkörper der Maschine stehen. Auf diese Weise können die in der Wicklung bzw. in den Leiterstäben entstehenden Stromwärmeverluste effektiv abgeführt werden.

Gemäß einer Ausführungsform einer Radialfluss-Doppelrotormaschine ist sowohl an dem ersten Rotor als auch an dem zweiten Rotor eine vorbestimmte Anzahl von Polpaaren vorgesehen. Ein von den Leiterstäben jeweils überstrichener Winkel ist dabei zur Ausbildung einer Leiterschleife pro Pol der Rotoren ausgebildet. Der vorzusehende überstrichene Winkel lässt sich somit aus dem Quotienten aus einer ganzen Umdrehung ($2\pi$ oder 360°) und der doppelten Polpaarzahl $p$ errechnen.

Ein weiter Aspekt der Offenbarung betrifft ein Verfahren zur Herstellung eines Stators, mit den Schritten: Bereitstellen eines Statorkerns mit jeweils eine Schraubenlinie beschreibenden radial außen liegenden Statornuten mit einem ersten Drehsinn und jeweils eine Schraubenlinie mit entgegengesetztem Drehsinn beschreibenden radial innen liegenden Statornuten; Einführen von einzelnen Leiterstäben den Schraubenlinien folgend durch die inneren und äußeren Statornuten; und Verbinden der in die inneren und äußeren Statornuten eingeführten Leiterstäbe an den Leiterstabenden zur Ausbildung von Leiterschleifen.

Gemäß einer Ausführungsform des Verfahrens zur Herstellung umfasst das Bereitstellen des Statorkerns die Herstellung eines Statorblechpakets, wobei einzelne Statorbleche, welche Ausnehmungen zur Ausbildung von Statornuten aufweisen, zueinander verdreht gestapelt werden. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht. Die Herstellung der einzelnen Statorbleche mit einer solchen Geometrie erfolgt vorteilhafterweise durch Stanzen oder Laserstrahlschneiden von Einzellamellen aus Elektroblech.

Gemäß einer Weiterbildung des Verfahrens enthält das Statorblechpaket ein inneres Teilpaket und ein äußeres Teilpaket, wobei alle Statorbleche des inneren Teilpakets mit einer jeweils gleichen Geometrie und alle Statorbleche des äußeren Teilpakets mit einer jeweils gleichen Geometrie ausgebildet sind, und wobei die Statorbleche des inneren Teilpakets zur Ausbildung der innen liegenden Statornuten und die Statorbleche des äußeren Teilpakets zur Ausbildung der außen liegenden Statornuten zueinander entgegengesetzt verdreht gestapelt werden. In diesem Fall können alle Bleche des jeweils inneren und äußeren Pakets in derselben Geometrie ausgeführt sein, wodurch der Herstellungsprozess sehr wirtschaftlich wird.Für alle parallel angeordneten bzw. gestapelten Statorbleche des inneren Teilpakets kann somit die gleiche Stanzform eingesetzt werden kann und für alle parallel angeordneten bzw. gestapelten Statorbleche des äußeren Teilpakets kann die gleiche Stanzform eingesetzt werden. Zwei benachbarte Statorbleche des inneren Teilpaktes werden in eine erste Richtung leicht zu einander um einen vorbestimmten Winkel um die Mittelachse verdreht und zwei benachbarte Statorbleche des äußeren Teilpaktes werden in eine zweite Richtung leicht zu einander um einen vorbestimmten Winkel um die Mittelachse verdreht. Auf diese Weise werden die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht. Auf diese Weise lassen sich mit geringem Fertigungsaufwand die entgegengesetzten Schraubenlinien der Statornuten realisieren.

Gemäß einer weiteren Ausführungsform des Verfahrens weist das Statorblechpaket eine Vielzahl unterschiedlich geformter Statorbleche auf, wobei die Ausnehmungen für die inneren und äußeren Statornuten jeweils in einem gemeinsamen Statorblech integriert sind, und wobei die Steigung der Schraubenlinie durch eine fortwährende Verschiebung der inneren und äußeren Statornuten zueinander von Statorblech zu Statorblech realisiert wird, insbesondere mit einem flexiblen Stanz- oder Laserstrahl-Trennprozess. Dabei werden innere und äußere Statornuten in einem einzigen Statorblech (Lamelle) integriert und der schraubenförmige Verlauf der Statornuten wird durch eine fortwährende Verschiebung der Ausnehmungen zueinander im Trennprozess, beispielswiese mittels eines flexiblen Stanzprozesses oder eines Laserstrahl-Trennprozess, in jedem Einzelblech herbeigeführt. Dies hat den Vorteil, dass mit weniger Teilen auch weniger Fertigungsschritte notwendig sind und das somit entstehende Statorblech bzw. der gesamte Statorkern eine höhere mechanische Festigkeit aufweist.

In einer weiteren Ausführungsform weist das Verfahren ferner den Schritt des Bereitstellens einer Trägereinrichtung, welche zum formschlüssigen Eingriff mit den Leiterstabenden an zumindest einem axialen Ende zur Drehmomentabstützung ausgebildet ist, und den Schritt des formschlüssigen In-Eingriff-Bringens der Trägereinrichtung mit den Leiterstabenden an dem zumindest einen axialen Ende an einer axial zu dem Statorkern versetzt angeordneten Position.

Mit einem auf diese Weise hergestellten Stator lässt sich gemäß einem Aspekt ferner ein Verfahren zur Herstellung einer Radialfluss-Doppelrotormaschine durchführen, mit den weiteren Schritten: Bereitstellen einer mechanisch festlegbaren Basis und einer Trägereinrichtung, welche zum formschlüssigen Eingriff mit der Wicklung an dem zumindest einen axialen Ende zur Drehmomentabstützung ausgebildet ist, Befestigen der Trägereinrichtung mit der Basis, und bereitstellen eines Doppelrotors, der einen Innenrotor und einen Außenrotor aufweist, wobei der Innenrotor und der Außenrotor jeweils einen ringförmigen Grundkörper, der zur Flussführung ausgelegt ist, und eine gemeinsame Mittelachse aufweisen, wobei an dem ringförmigen Grundkörper jeweils eine Mehrzahl von Permanentmagneten befestigt und jedem Permanentmagnet im Querschnitt ein vorbestimmtes Winkelsegment des ringförmigen Grundkörpers zugeordnet ist, wobei die Permanentmagnete derart ausgebildet und an dem jeweiligen Grundkörper angeordnet sind, dass sich das Winkelsegment im axialen Verlauf in Umfangsrichtung verschiebt, so dass die Permanentmagnete ein zu der Mittelachse schräg verlaufendes Feld erzeugen, wobei ein Feld des Innenrotors in einer ersten Richtung schräg verläuft, die an dem ersten Drehsinn orientiert ist, und wobei ein Feld des Außenrotors in einer zweiten Richtung schräg verläuft, die an dem zweiten Drehsinn orientiert ist.

Die obigen Ausgestaltungen und Weiterbildungen lassen sich, sofern sinnvoll, beliebig miteinander kombinieren. Insbesondere sind sämtliche Merkmale des Stators auf das Verfahren zur Herstellung eines Stators übertragbar, und umgekehrt. Ferner lassen sich sämtliche Merkmale des Stators auf eine entsprechende Radialfluss-Doppelrotormaschine sowie auf eine Fahrzeugachse mit derartiger Radialfluss-Doppelrotormaschine und/oder ein Fahrzeug mit derartiger Fahrzeugachse übertragen.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1    eine Explosionsdarstellung einer Radialfluss-Doppelrotormaschine mit einem Stator und einem Doppelrotor;

Fig. 2    eine Explosionsdarstellung eines Doppelrotors;

Fig. 3    eine Draufsicht zweier axialen Segmente eines Permanentmagneten;

Fig. 4    eine schematische Querschnittdarstellung eines Abschnitts eines Innen- und Außenrotors mit Permanentmagneten;

Fig. 5    eine Draufsicht eines parallelogrammförmigen Permanentmagneten;

Fig. 6    eine schematische Querschnittdarstellung eines Abschnitts eines Innen- und Außenrotors mit parallelogrammförmigen Permanentmagneten;

Fig. 7    eine perspektivische Darstellung einer Wicklung;

Fig. 8    eine perspektivische Darstellung eines Statorkerns;

Fig. 9    eine Querschnittdarstellung einer Radialfluss-Doppelrotormaschine;

Fig. 10    eine Querschnittdarstellung einer Radialfluss-Doppelrotormaschine gemäß einer weiteren Ausführungsform;

Fig. 11A-C    Querschnittdarstellungen einer Radialfluss-Doppelrotormaschine an unterschiedlichen axialen Positionen mit eingezeichneter Feldverzerrung;

Fig. 12    eine schematische Längsschnittdarstellung eines Stators;

Fig. 13    eine schematische Längsschnittdarstellung einer Radialfluss-Doppelrotormaschine;

Fig. 14    eine Explosionsdarstellung einer Radialfluss-Doppelrotormaschine gemäß einer Ausführungsform;

Fig. 15    eine Explosionsdarstellung eines Stators gemäß einer Ausführungsform;

Fig. 16    eine Explosionsdarstellung einer Radialfluss-Doppelrotormaschine gemäß einer weiteren Ausführungsform;

Fig. 17    eine perspektivische Darstellung der Radialfluss-Doppelrotormaschine gemäß Fig. 16 im montierten Zustand;

Fig. 18    eine perspektivische Längsschnittdarstellung einer Radialfluss-Doppelrotormaschine gemäß einer noch weiteren Ausführungsform;

Fig. 19    eine Explosionsdarstellung eines Statorblechpakets eines Statorkerns;

Fig. 20    eine schematische Längsschnittdarstellung einer Statornut;

Fig. 21    eine Draufsicht einer Wicklung;

Fig. 22    eine perspektivische Darstellung einer FEM Simulation einer Wicklung unter Last;

Fig. 23    eine perspektivische Darstellung einer FEM Simulation einer Vergleichs-Wicklung mit gerader Ausführung der Leiterstäbe unter Last; und

Fig. 24    ein Ablaufdiagramm eines Verfahrens zur Herstellung eines Stators.

Die beiliegenden Figuren der Zeichnung sollen ein weiteres Verständnis der Ausführungsformen der Erfindung vermitteln.

Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

BESCHREIBUNG VON AUSFÜHRUNGSBEISPIELEN

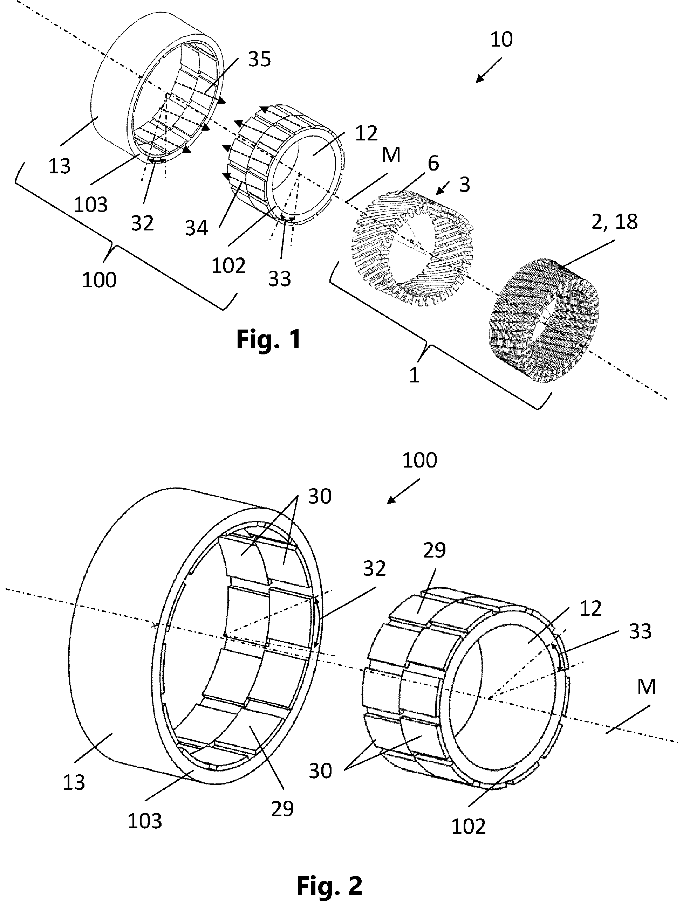

Fig. 1 zeigt eine Explosionsdarstellung einer Radialfluss-Doppelrotormaschine 10 mit einem Stator 1 und einem Doppelrotor 100.

Der Stator 1 und Doppelrotor 100 der Radialfluss-Doppelrotormaschine 10 weisen eine gemeinsame Mittelachse M auf. Der Stator 1 wird zwischen dem Innenrotor 12 und Außenrotor 13 des Doppelrotors 100 konzentrisch aufgenommen.

Der Stator 1 weist einen Statorkern 2 und eine darin aufgenommene torsionssteife Wicklung 3 auf. Dabei verlaufen in einem radial inneren Teil des Stators 1 die Leiterstäbe 6 der torsionssteifen Wicklung 3 in einem ersten Drehsinn schraubenförmig. In einem radial äußeren Teil des Stators 1 verlaufen die Leiterstäbe 6 der torsionssteifen Wicklung 3 in einem entgegengesetzten zweiten Drehsinn schraubenförmig.

Der Doppelrotor 100 weist einen Innenrotor 12 und einen Außenrotor 13 auf. Der Innenrotor 12 und der Außenrotor 13 weisen jeweils einen ringförmigen Grundkörper 102, 103 auf. Die ringförmigen Grundkörper 102, 103 sind zur Flussführung ausgelegt und weisen eine gemeinsame Mittelachse M auf. An den ringförmigen Grundkörpern 102, 103 sind jeweils eine Mehrzahl von Permanentmagneten 29 befestigt. Jedem Permanentmagnet 29 ist im Querschnitt ein vorbestimmtes Winkelsegment 32, 33 des ringförmigen Grundkörpers 102, 103 zugeordnet. Die vorbestimmten Winkelsegmente 32, 33 erstecken sich bogenförmig entlang des Umfangs der ringförmigen Grundkörper 102, 103.

Die Permanentmagnete 29 sind derart ausgebildet und an dem jeweiligen ringförmigen Grundkörper 102, 103 angeordnet, dass sich das vorbestimmte Winkelsegment 32, 33 im axialen Verlauf in Umfangsrichtung verschiebt, so dass die Permanentmagnete 29 ein zu der Mittelachse M schräg verlaufendes Feld 34, 35 erzeugen. Das Feld 34 des Innenrotors 12 verläuft in einer ersten Richtung schräg, die an dem ersten Drehsinn der torsionssteifen Wicklung 3 orientiert ist. Das Feld 35 des Außenrotors 13 verläuft in einer zweiten Richtung schräg, die an dem zweiten Drehsinn der torsionssteifen Wicklung 3 orientiert ist.

Die jeweils entgegengesetzt schräg verlaufenden Felder 34, 35 der Permanentmagneten 29 sind durch die schräg eingezeichneten punktierten Pfeile in Fig. 1 dargestellt. Die Feldausbreitungslinien der Felder 34, 35 verlaufen wie eingezeichnet entgegengesetzt schräg über die Permanentmagnete 29 des Innenrotors 12 und Außenrotors 13.

Die Ausbildung und Anordnung der Permanentmagnete 29 zur Verschiebung des Winkelsegments 32, 33 im axialen Verlauf ist nicht auf die hier dargestellte Ausführung beschränkt, sondern vielfältig modifizierbar.

Fig. 2 zeigt eine Explosionsdarstellung eines Doppelrotors.

Der Doppelrotor 100 weist einen Innenrotor 12 und einen Außenrotor 13 auf. Der Innenrotor 12 wird konzentrisch innerhalb des Außenrotors 13 aufgenommen. Auf der innenliegenden Fläche des ringförmigen Grundkörpers 103 des Außenrotors 13 sind mehrere Permanentmagneten 29 angeordnet.

Den Permanentmagneten 29 ist im Querschnitt ein vorbestimmtes Winkelsegment 32 des ringförmigen Grundkörpers 103 zugeordnet. Wie in Fig. 2 dargestellt, verschiebt sich das Winkelsegment 32 im axialen Verlauf in Umfangsrichtung und das benachbarte axiale Segment 30 des Permanentmagneten ist dementsprechend in Umfangsrichtung axial verschoben angeordnet.

Die Permanentmagnete 29 sind hier beispielhaft in mehrere axiale Segmente 30 unterteilt. Bei weiteren Ausführungsformen sind aber auch andere Ausbildungen und Anordnungen der Permanentmagnete 29 zur Verschiebung des Winkelsegments 32, 33 im axialen Verlauf denkbar.

Dieser geometrische Zusammenhang ist ebenfalls auf der außenliegenden Fläche des ringförmigen Grundkörpers 102 des Innenrotors 12 gegeben. Die Permanentmagnete 29 können bei weiteren Ausführungsformen alternativ oder zusätzlich zu der dargestellten Anordnung der Permanentmagneten auf der Oberfläche der Innen- und Außenrotoren 12, 13 auch innerhalb der ringförmigen Grundkörper 102, 103 versenkt werden. Ferner sind die ringförmigen Grundkörper 102, 103 aus Vollmaterial gefertigt.

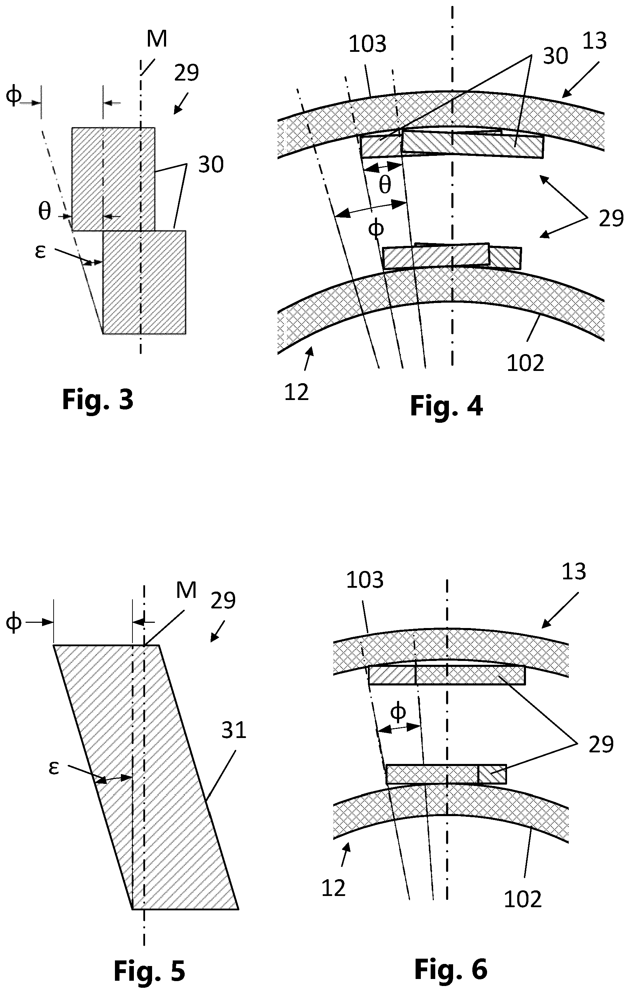

Fig. 3 zeigt eine Draufsicht eines Permanentmagneten 29.

Der Permanentmagnet 29 ist mit einem beispielhaften vorbestimmten Schrägungswinkel ε relativ zu der axialen Richtung der Mittelachse M auf dem ringförmigen Grundkörper 102, 103 (nicht dargestellt) angeordnet.

Der dargestellte Permanentmagnet 29 ist beispielhaft in mehrere axiale Segmente 30 geteilt ausgebildet. Einem axialen Segment 30 ist jeweils ein zum benachbarten axialen Segment 30 um einen Anstellwinkel θ um die Mittelachse M verschobenes Winkelsegment 32, 33 (nicht dargestellt) des jeweiligen Grundkörpers zugeordnet.

Der resultierende Gesamtschrägungswinkel φ des Permanentmagneten ergibt sich geometriebedingt aus dem Anstellwinkel θ, insbesondere aus einem Mehrfachen des Anstellwinkels θ. Bei einer vorbestimmten Anzahl von n axialen Segmenten 30 pro Permanentmagnet 29 ergibt sich der resultierende Gesamtschrägungswinkel φ aus dem Anstellwinkel θ mit der Beziehung, $\phi = n * \theta$. Zusätzlich ist der hier beispielhaft eingezeichnete vorbestimmte Schrägungswinkel ε als eine Funktion der Länge der Radialfluss-Doppelrotormaschine 10 ausgebildet. Bei weiteren Ausführungsformen kann ein vorbestimmter Schrägungswinkel auch anders als abgebildet definiert sein. Insofern ist ε in Fig. 3 rein beispielhaft als projizierter Winkel auf der Mantelfläche des Permanentmagneten 29 gezeigt.

Wie in Fig. 3 dargestellt, sind die axialen Segmente 30 in der dargestellten Ausführungsform mit der langen Kante parallel zur Mittelachse M angeordnet. In dieser Ausführungsform kommt es zu einer optimalen Ausnutzung der Oberfläche der ringförmigen Grundkörper 102, 103. Gemäß einer weiteren Ausführungsform kann eine Kante der axialen Segmente 30 auf dem ringförmigen Grundkörper 102, 103 mit einem bestimmten Winkel zur Mittelachse angeordnet sein, beispielsweise kann die Kante der axialen Segmente 30 entlang des vorbestimmten Schrägungswinkels ε ausgerichtet sein. Es sind ferner bei weiteren Ausführungsformen auch andere zu dem gewünschten Gesamtschrägungswinkel der Anordnung führende Ausrichtungen der axialen Segmente 30 auf der Oberfläche der ringförmigen Grundkörpers 102, 103 möglich.

Fig. 4 zeigt eine schematische Querschnittdarstellung eines Abschnitts eines Innen- und Außenrotors 12, 13 mit Permanentmagneten 29.

Die gezeigten Permanentmagneten 29 sind jeweils in axialer Richtung hintereinander auf den ringförmigen Grundkörpern 102, 103 angeordnet, wie in Fig. 3 dargestellt. Ferner sind der resultierende Gesamtschrägungswinkel φ und der Anstellwinkel θ um die Mittelachse M (nicht dargestellt) der Radialfluss-Doppelrotormaschine 10 eingezeichnet.

Die Verschiebung der jeweiligen beiden axialen Segmente 30 zueinander in Umfangsrichtung wird durch den Anstellwinkel θ beschreiben. Aufgrund der konzentrischen Anordnung der ringförmigen Grundkörper 102, 103 und der ausschließlich radial versetzten Anordnung der axialen Segmente 30 auf den jeweiligen ringförmigen Grundkörpern 102, 103, ist der Anstellwinkel θ der Permanentmagneten 29 auf dem Innen- und Außenrotor 12, 13 entgegengesetzt betragsgleich. Diese Anordnung der axialen Segmente 30 ist auch für die Funktion des Doppelrotors 100 ausschlaggebend.

Wie bereits erwähnt ergibt sich der resultierende Gesamtschrägungswinkel φ in Umfangsrichtung aus dem Anstellwinkel θ der axialen Segmente 30 und der Anzahl der axialen Segmente 30. Ferner ist bei der rechteckigen Ausführung der axialen Segmente 30 der Permanentmagneten 29 mit einer ebenen Oberfläche ein Spalt zwischen den jeweiligen axialen Segmenten 30 und den inneren oder äußeren Mantelflächen der ringförmigen Grundkörpern 102, 103 gegeben. Dieser Spalt kann beispielsweise bei einer stoffschlüssigen Verbindung der axialen Segmente 30 der Permanentmagneten 29 mit den ringförmigen Grundkörpern 102, 103 mit einem Stoffschlussmedium gefüllt werden. Die stoffschlüssige Verbindung kann beispielsweise mittels eines geeigneten Klebers realisiert sein. Es ist jedoch zu beachten, dass weitere Mechanismen und Verfahren für die Befestigung möglich wären, insbesondere auch solche bei denen kein Spalt zwischen den jeweiligen axialen Segmenten 30 und den ringförmigen Grundkörpern 102, 103 entsteht. Beispielsweise sind alternativ oder zusätzlich lokale Ausnehmungen des Rotors zur Spaltkompensation denkbar. Ferner können die inneren und äußeren Permanentmagnete bei weiteren Ausführungsformen in der Größe gleich ausgebildet sein oder sich, wie hier dargestellt, in der Größe unterscheiden, vorzugsweise um in radialer Ausrichtung ein gleiches Winkelsegment abzudecken.

Fig. 5 zeigt eine Draufsicht eines parallelogrammförmigen Permanentmagneten 29.

Die Form der axialen Segmente 30 oder der Permanentmagneten 29 kann wie in Fig. 5 dargestellt auch von der rechteckigen Form aus Fig. 3 abweichen. Der dargestellte Permanentmagnet 29 besitzt eine Parallelogrammform, wobei die diagonalen Kanten 31 des Permanentmagneten 29 mit einem vorbestimmten Schrägungswinkel ε in Bezug auf die axiale Richtung der Mittelachse M geschrägt sind. Diesbezüglich ergibt sich ein gleich ausgebildeter resultierende Gesamtschrägungswinkel φ in Umfangsrichtung um die Mittelachse M der Permanentmagneten 29. Bei der Verwendung von parallelogramförmigen Permanentmagneten 29 kann die Oberfläche der ringförmigen Grundkörper 102, 103 (nicht dargestellt) optimal ausgenutzt werden, und es kommt zu keinem überstehen der Permanentmagneten 29 oder freilassen der Oberfläche.

Fig. 6 zeigt eine schematische Querschnittdarstellung eines Abschnitts eines Innen- und Außenrotors 12, 13 mit parallelogrammförmigen Permanentmagneten 29.

Ähnlich wie zu Fig. 4 bereits erläutert ist der eingezeichnete resultierende Gesamtschrägungswinkel φ in Umfangsrichtung um die Mittelachse M zu erkennen. Der resultierende Gesamtschrägungswinkel φ beschreibt den überstrichenen Winkel in Umfangsrichtung, der durch die diagonale Kante 31 (nicht dargestellt) des jeweiligen Permanentmagneten 29 entsteht. Die in Bezug auf Fig. 4 beschriebene Problematik mit der Entstehung eines Spaltes am Innen- und Außenrotor 12, 13 kann in ähnlicher Art und Weise bei den abgebildeten parallelogrammförmigen Permanentmagneten 29 gelöst werden. Die Platzierung der Permanentmagneten 29 auf den ringförmigen Grundkörpern 102, 103 zueinander ist in Abhängigkeit vom resultierenden Gesamtschrägungswinkel φ vorgesehen. Der Gesamtschrägungswinkel φ in Bezug auf die Umfangsrichtung ist für die dargestellten Permanentmagneten 29 auf dem Innen- und Außenrotor 12, 13 aufgrund des entgegengesetzten Drehsinns entgegengesetzt betragsgleich.

Bei der dargestellten Ausführungsform unterscheiden sich die inneren und äußeren Permanentmagnete 29 in der Größe, um in radialer Ausrichtung ein gleiches Winkelsegment abzudecken.

Allerdings können die die inneren und äußeren Permanentmagnete bei weiteren Ausführungsformen auch in der Größe gleich ausgebildet sein, beispielsweise zur Kostenreduktion im Rahmen einer Einteilstrategie.

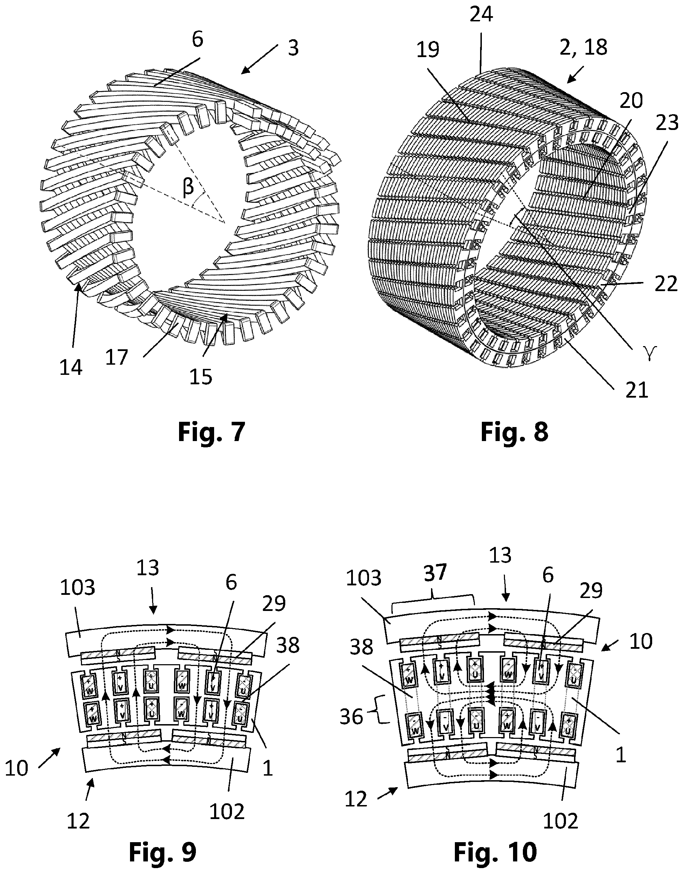

Fig. 7 zeigt eine perspektivische Darstellung einer Wicklung 3.

Die Wicklung 3 ist aus den besagten Leiterstäben 6 aufgebaut, welche schraubenförmig entlang der Mittelachse M verlaufen. Dazu sind die Leiterstäbe 6 nicht nur entsprechend verschränkt angeordnet, sondern auch gemäß dem Schraubenlinienverlauf in sich tordiert.

Der überstrichene Winkel β der Leiterstäbe 6 identifiziert den Winkel zwischen Anfang und Ende eines Leiterstabs 6 relativ zu Mittelachse M. Da die Steigung der Schraubenlinie der Leiterstäbe 6 gleich der Steigung der Schraubenlinie der Statornuten 19, 20 ist, die Leiterstäbe 6 aber länger als die Statornuten ausgebildet sind, lässt sich ein Verhältnis der jeweiligen überstrichenen Winkel α und β zur Charakterisierung der geometrischen Verhältnisse bilden, welches auch als Polbedeckungsgrad bezeichnet wird. Um ein Optimum zwischen magnetischen Verlusten und Drehmomentausnutzung einer Radialfluss-Doppelrotormaschine bereitzustellen liegt dieses Verhältnis (Polbedeckungsgrad)vorzugsweise in einem Bereich zwischen 0.6 und 0.75.

Die entgegengesetzte Verdrehung und Torsion der inneren und äußeren radialen Lagen 14, 15 von Leiterstäben 6 ist hier ebenfalls zu erkenne. Die Torsion ist derart ausgelegt, dass der Querschnitt in Bezug auf eine radiale Linie durch die Mitte des Leiterstabs an jeder Stelle des Leiterstabs stets gleich ist, was auch als 2,5 D Geometrie bezeichnet wird. Somit werden die Leiterstabenden der inneren und äußeren Lagen 14, 15 in einer gleichen Ausrichtung übereinander angeordnet. Die Leiterstäbe 6 der radialen inneren und äußeren Lagen 14, 15 können somit auf einfache Weise leitend verbunden werden, hier beispielhaft über ein radial verlaufendes Leiterstabstück 17, welches mit des Leiterstäben 6 verschweißt wird.

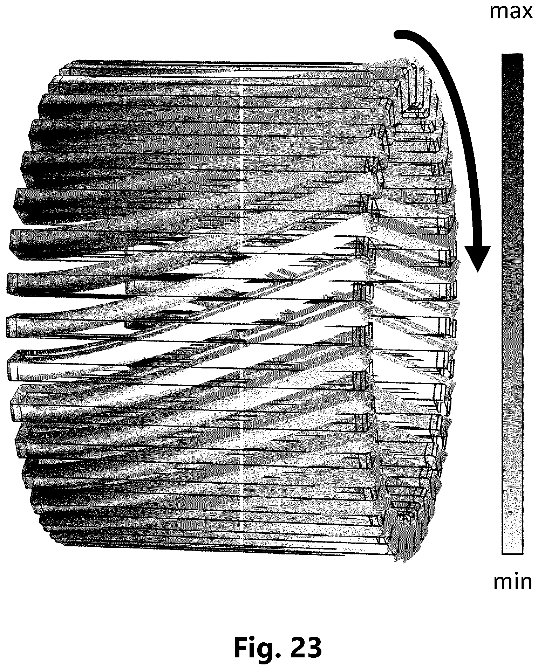

Anzumerken ist, dass die hier dargestellte Wicklung an sich nicht einzeln, sondern stets im Verbund mit dem Statorkern 2 hergestellt wird, worauf in Bezug auf Fig. 23 näher eingegangen wird.

Die Wicklung 3 weist in dem radial inneren Teil des Stators 1 (nicht dargestellt) eine radial innere Lage 15 von schraubenförmig angeordneten Leiterstäben 6 und in dem radial äu-ßeren Teil des Stators 1 eine radial äußere Lage 14 von entgegengesetzt schraubenförmig angeordneten Leiterstäben 6 auf.

Fig. 8 zeigt eine perspektivische Darstellung eines Statorkerns 2.

Der Statorkern 2 enthält ein Statorblechpaket 18 mit dem Wicklungsverlauf entsprechend schraubenförmig verlaufenden Statornuten 19, 20. Die innere Statornuten 20 des radial inneren Teils des Stators 1 (nicht dargestellt) gemäß dem ersten Drehsinn und äußere Statornuten 19 des radial äußeren Teils des Stators 1 gemäß dem zweiten Drehsinn zueinander gegensätzlich verlaufen.

Das Statorblechpaket 18 enthält ein inneres Teilpaket 23 mit radial inneren Statornuten 20 und ein äußeres Teilpaket 24 mit radial äußeren Statornuten 19. Die Statorbleche 22 des inneren Teilpakets 23 sind mit einer jeweils gleichen Geometrie und die Statorbleche 21 des äußeren Teilpakets 24 sind mit einer jeweils gleichen Geometrie ausgeführt. Die Statorbleche 22 des inneren Teilpakets 23 sind gemäß dem ersten Drehsinn der Leiterstäbe 6 (nicht dargestellt) und die Statorbleche 21 des äußeren Teilpakets 24 sind gemäß dem zweiten Drehsinn der Leiterstäbe 6 zueinander gegensätzlich um einen vorbestimmten Verdrehwinkel γ um die Mittelachse M zueinander verdreht gestapelt. Der eingezeichnete Verdrehwinkel γ beschreibt den Winkel in Umfangsrichtung relativ zu Mittelachse M zwischen den axialen Enden des Statorblechpakets 18, der durch die Verdrehung der einzelnen Statorbleche 21, 22 zueinander entsteht.

In einer bestimmten Ausführungsform ist der überstrichenen Winkel der Statornuten α identisch mit dem Verdrehwinkel γ.

Da die Feldverzerrung nicht in voller Ausprägung dem Verlauf der Ständernuten folgt, muss der resultierende Gesamtschrägungswinkel φ in Umfangsrichtung kleiner sein als der Verdrehwinkel γ. Dementsprechend beträgt der resultierende Gesamtschrägungswinkel φ in Umfangsrichtung (nicht dargestellt) der Permanentmagnete 29 des Innenrotors 12 in einem Bereich von 20% bis 40% des Verdrehwinkels γ der Statorbleche 22 des inneren Teilpakets 23 und/oder resultierende Gesamtschrägungswinkel φ in Umfangsrichtung der Permanentmagnete 29 des Außenrotors 13 in einem Bereich von 20% bis 40% des Verdrehwinkels γ der Statorbleche 21 des äußeren Teilpakets 24. Bei der beschriebenen Abstimmung des resultierende Gesamtschrägungswinkel φ in Umfangsrichtung auf den Verdrehwinkels γ entsteht eine maximale Erhöhung des Drehmoments.

Fig. 9 zeigt eine Querschnittdarstellung einer Radialfluss-Doppelrotormaschine 10.

Der abgebildete bogenförmige Abschnitt der Radialfluss-Doppelrotormaschine 10 zeigt Leiterstäbe 6, Permanentmagneten 29, Stator 1, Innenrotor 12, Außenrotor 13 und ringförmige Grundkörper 102, 103. Ferner ist auch der magnetische Fluss in tangentialer Richtung in den Innen- und Außenrotoren 12, 13 und in radialer Richtung im Stator 1 eingezeichnet. In der gezeigten Ausführungsform ist der Stator 1 "jochlos" ausgebildet. Zwischen den Leiterstäben 6 verläuft somit zwar ein Statorjoch 38, welches aber lediglich dem mechanischen Zusammenhalt des Statorblechpakets 18 (nicht dargestellt) des Stators 1 dient. Wie in Fig. 9 dargestellt liegt das Statorjoch 38 im funktionsrelevanten magnetischen Fluss. Bei der dargestellten Ausführungsform der Radialfluss-Doppelrotormaschine 10 kommt es jedoch an den axialen Enden der Radialfluss-Doppelrotormaschine 10 zu einer Reduzierung der tangentialen Magnetflussführung. Dies hat eine negative Auswirkung auf den Wirkungsgrad der Radialfluss-Doppelrotormaschine 10 und demnach kommt es zu einer ungewollten Drehmomentreduzierung.

Fig. 10 zeigt eine Querschnittdarstellung einer Radialfluss-Doppelrotormaschine 10 gemäß einer weiteren Ausführungsform.

Die in Fig. 10 abgebildete Ausführungsform der Radialfluss-Doppelrotormaschine 10 besitzt im Vergleich zu der Ausführungsform aus Fig. 9 ein deutlich dickeres Statorjoch 38 (nicht maßstabsgetreu). Das Statorjoch 38 wird durch die eingezeichnete radiale jochdicke 36 beschrieben.

Die Permanentmagnete 29 des Innenrotors 12 und des Außenrotors 13 weisen jeweils eine vorbestimmte tangentiale Breite 37 auf. Bei einer besonders vorteilhaften Ausführungsform weist der Statorkern 2 eine radiale Jochdicke 36, die im Bereich von 10% bis 20% der tangentialen Breite 37 der Permanentmagnete 29 beträgt. Es ist somit möglich die tangentiale Flussführung an den axialen Enden der Radialfluss-Doppelrotormaschine 10 zu unterstützen.

Bei einer Ausführungsform mit Permanentmagneten 29 die eine Parallelogrammform aufweisen, ist der Querschnitt der Permanentmagnete 29 für das Verhältnis zwischen der tangentialen Breite 37 der Permanentmagneten 29 und der radialen Jochdicke 36 ausschlaggebend.

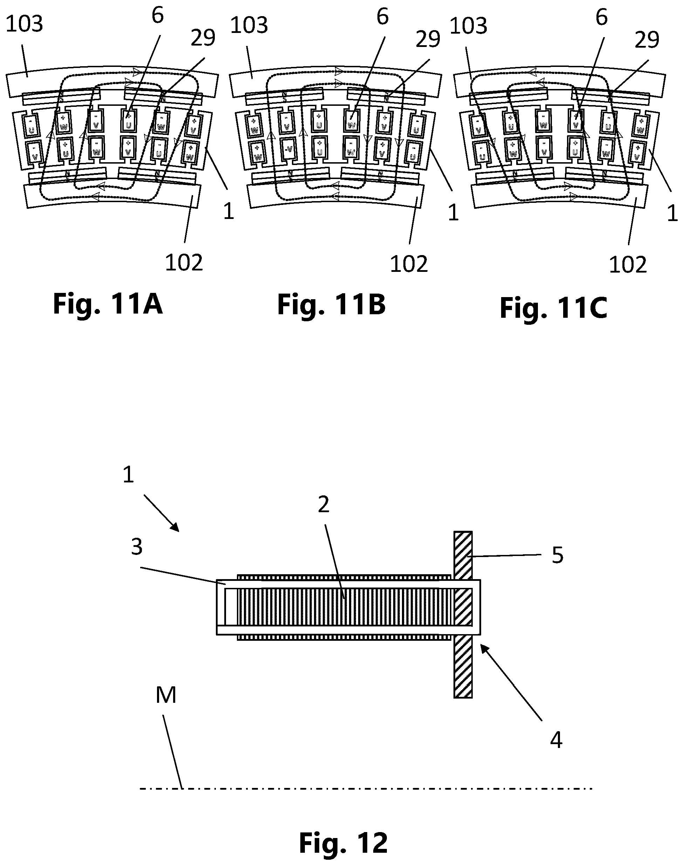

Fig. 11A-C zeigt Querschnittdarstellungen einer Radialfluss-Doppelrotormaschine 10 mit eingezeichneter Feldverzerrung.

Die drei Querschnittdarstellungen (Fig. 11A links, Fig. 11B mittig, Fig. 11C rechts) beschreiben jeweils eine axiale Lage innerhalb einer Radialfluss-Doppelrotormaschine 10. Die linke Querschnittdarstellung zeigt ein vorderes Ende, die mittlere Querschnittdarstellung zeigt die axiale Mitte und die rechte Querschnittdarstellung zeigt ein hinteres Ende einer Radialfluss-Doppelrotormaschine 10.

Die hier dargestellte Radialfluss-Doppelrotormaschine 10 beinhaltet einteilige Permanentmagneten 29, die in axialer Richtung angeordnet sind. Wie in Fig. 11 erkennbar, beinhaltet lediglich die Radialfluss-Doppelrotormaschine 10 in der mittleren Querschnittdarstellung ein uniformes magnetisches Feld, worin die Feldlinien im Stator 1 ausschließlich in einer radialen Richtung verlaufen. Bei der linken und rechten Querschnittdarstellung der Radialfluss-Doppelrotormaschine 10 kommt es wie eingezeichnet zu einer Feldverzerrung. Die jeweiligen Feldlinien sind in der linken und rechten Querschnittdarstellung, insbesondere innerhalb des jeweiligen Stators entsprechend geschrägt.

Zusätzlich ist eine Verschiebung der Leiterstäbe 6 über die axiale Position der Radialfluss-Doppelrotormaschine 10 (vorderes Ende, axiale Mitte, hinteres Ende) aus den drei Querschnittdarstellungen ersichtlich. Lediglich bei der mittleren Darstellung liegen die Leiterstäbe 6 gleichen Stranges (U, V, W) und gleicher Stromrichtung (+, -) übereinander. Demzufolge weist das Magnetfeld seine maximale Amplitude nur in der axialen Mitte der Radialfluss-Doppelrotormaschine 10 auf. Aufgrund der zugrundeliegenden geometrischen Beziehung zwischen den Leiterstäben 6 und den Permanentmagneten 29 reduziert sich die Amplitude des Magnetfelds zu den beiden axialen Enden (Querschnittsdarstellung links und rechts) der Radialfluss-Doppelrotormaschine 10 hin. Die daraus entstehende Verzerrung des Magnetfelds führt zu einer Reduzierung des Drehmoments, da die Permanentmagnete in den Rotoren nicht mehr in der jeweils für die Drehmomenterzeugung optimalen Position liegen. Dem wird mit der in Bezug auf die Fig. 1 bis 6 beschriebenen Anordnung und Ausbildung der Permanentmagnete 29 an dem jeweiligen ringförmigen Grundkörper 102, 103 im axialen Verlauf in Umfangsrichtung entgegengewirkt, so dass die Permanentmagnete 29 ein zu der Mittelachse M schräg verlaufendes Feld 34, 35 erzeugen, was dann innerhalb der Feldverzerrung optimal angeordnet liegt.

Fig. 12 zeigt eine schematische Längsschnittdarstellung eines Stators 1.

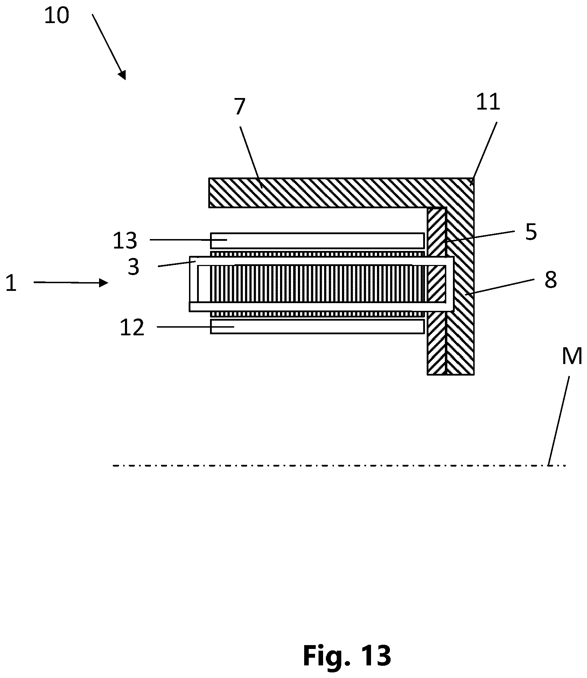

Es handelt sich hierbei um eine Prinzipskizze eines Stators 1 für eine Radialfluss-Doppelrotormaschine 10 (siehe dazu Fig. 13), insbesondere für einen Radnabenmotor. Der Stator weist einen Statorkern 2, eine Wicklung 3 und eine Trägereinrichtung 5 auf. Der Statorkern 2, die Wicklung 3 und die Trägereinrichtung 5 sind rotationssymmetrisch um die eingezeichnete Mittelachse M aufgebaut.

Die Wicklung 3 ist zur Drehmomentabstützung des Stators 1 selbsttragend ausgeführt und ragt an zumindest einem axialen Ende 4 über den Statorkern 2 hinaus. Die Trägereinrichtung 5 ist axial zum Statorkern 2 versetzt angeordnet und ist formschlüssig mit der Wicklung 3 an zumindest einem axialen Ende 4 zur Drehmomentabstützung verbunden. Auf diese Weise kann ein an dem Statorkern 2 im Betrieb einer Radialfluss-Doppelrotormaschine 10 anstehendes Drehmoment mittels der selbsttragenden Wicklung 3 an der Trägereinrichtung 4 abgestützt werden.

Die Wicklung enthält ein Leitermaterial mit geringem elektrischem Widerstand, vorzugsweise Kupfer. Der Statorkern 2 ist bevorzugt aus einem weichmagnetischen Material zur magnetischen Flussführung aufgebaut. Die Trägereinrichtung enthält vorzugsweise ein wärmeleitendes Material, beispielsweise eine Aluminiumlegierung. Selbstverständlich ist die Wicklung 3 elektrisch isoliert.

Fig. 13 zeigt eine schematische Längsschnittdarstellung einer Radialfluss-Doppelrotormaschine 10.

Auch hierbei handelt es sich um eine rein illustrative Prinzipskizze. Die Radialfluss-Doppelrotormaschine 10 weist demnach zusätzlich zu dem Stator 1 gemäß Fig. 12 eine mechanisch festgelegte Basis 11, einen ersten Rotor 12 und einen zweiten Rotor 13 auf. Der Statorkern 2, die Wicklung 3, die Trägereinrichtung 5, die Basis 11, der erste Rotor 12 und der zweite Rotor 13 sind ebenfalls rotationssymmetrisch um die eingezeichnete Mittelachse M aufgebaut.

Die Wicklung 3 ist zur Drehmomentabstützung des Stators 1 selbsttragend ausgeführt und ragt an zumindest einem axialen Ende 4 über den Statorkern 2 hinaus und ist über die Trägereinrichtung 5 an der Basis 11 abgestützt. Die Trägereinrichtung 5 ist dazu axial zum Statorkern 2 versetzt angeordnet und ist formschlüssig mit der Wicklung 3 an zumindest einem axialen Ende 4 zur Drehmomentabstützung verbunden. Die Trägereinrichtung 5 ist wiederum mit der Basis befestigt, sodass das Drehmoment über die Trägereinrichtung 5 an der Basis 11 abstützbar ist.

Der erste Rotor 12 ist radial innerhalb des Statorkerns 2 und der zweite Rotor 13 ist radial außerhalb des Statorkerns 2 angeordnet. Die Basis 11 kann beispielsweise als Gehäuse der Maschine ausgebildet sein und umfasst hier rein illustrativ eine als L-förmig ausgebildete Struktur, die mit zwei Schenkeln 7, 8 dargestellt ist. Die Darstellung ist nicht als abschließend zu verstehen, vielmehr kann die Basis weitere Komponenten und/oder strukturelle Abschnitte aufweisen. Der erste Schenkel 7 verläuft im Wesentlichen radial, der zweite Schenkel 7 im Wesentlichen axial mit dem größten Abstand zur Mittelachse M.

Rein schematisch ist die Trägereinrichtung 5 radial verlaufend einteilig dargestellt, sie kann aber auch mehrteilig und/oder mit einer anderen zum Formschluss mit der Wicklung 3 ausgebildeten Geometrie vorgesehen sein. Der dargestellte Überlapp der Wicklung 3 mit der Basis 11 ist rein der illustrativen schematischen Darstellung geschuldet und bedeutet keine direkte Verbindung. Die Wicklung 3 ist vorzugsweise über das Trägerelement 5 mit der Basis 11 zur Drehmomentabstützung verbunden.

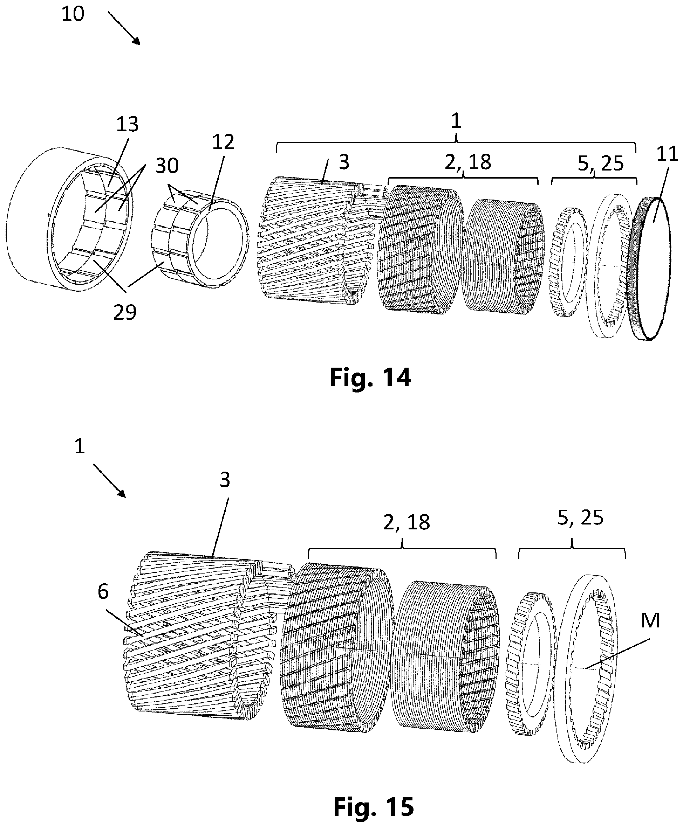

Fig. 14 zeigt eine Explosionsdarstellung einer Radialfluss-Doppelrotormaschine 10 gemäß einer Ausführungsform.

Die Radialfluss-Doppelrotormaschine 10 weist, zusätzlich zu den Komponenten des Stators 1, einen ersten Rotor 12, zweiten Rotor 13 und eine Basis 11 auf. Der erste Rotor 12 ist radial innerhalb und zweite Rotor 12 radial außerhalb des Statorkerns 2 angeordnet. Die Rotoren 12, 13 sind bevorzugt aus einem weichmagnetischen Vollmaterial gefertigt und an der jeweiligen dem Statorkern zugewandten Oberfläche mit Permanentmagneten, sogenannten Oberflächenmagneten, als Pole besetzt. Die Permanentmagnete 29 sind wie in Bezug auf Fig. 1 und 2 angeordnet.

Die Basis 11 ist hier zur besseren Übersichtlichkeit lediglich schematisch dargestellt. Wie in der Beschreibung von Fig. 13 bereits beschrieben, ist die Basis 11 im montierten Zustand mit der Trägereinrichtung 5 befestigt. Die Basis 11 ist mechanisch gegenüber einem Bezugssystem, beispielsweise einem Träger einer Fahrzeugachse, festgelegt.

Fig. 15 zeigt eine Explosionsdarstellung eines Stators 1 gemäß einer Ausführungsform.

Der Stator 1 weist eine Wicklung 3, einen Statorkern 2 und eine Trägereinrichtung 5 auf, wobei hier eine vorteilhafte beispielhafte Ausführung dieser Komponenten genauer perspektivisch dargestellt ist.

Die Wicklung 3 ist aus einer inneren und äußeren Lage mit mehreren miteinander stabwerkartig verbundenen Leiterstäben 6 aufgebaut. Die Leiterstäbe 6 in den inneren und äußeren Lagen sind einander entgegengesetzt schraubenförmig angeordnet und an den Leiterstabenden mit einem die innere und äu-ßere Lage verbindenden radialen Leiterstück 17 stoffschlüssig gekoppelt.

Die Dicke der inneren und äußeren Lage entspricht jeweils der Dicke eines Leiterstabs 6. Das heißt, die Wicklung 3 ist durch eine einzige die Leiterschlaufe bildenden Leiterschicht mit einem vergleichsweise großen Querschnitt in Form jeweils eines Leiterstabs 6 gebildet.

Durch die mit den Leiterstäben gebildete Stabwerkstruktur ist die Wicklung torsionssteif und dadurch zur Drehmomentabstützung selbsttragend ausgebildet.

Die Leiterstäbe 6 bilden dementsprechend wellenförmige Wicklungsstränge und lassen sich durch entsprechende, dem Fachmann bekannte und daher nicht weiter beschriebene Verschaltungen, wie beispielsweise Dreieckschaltung, Sternschaltung oder dergleichen, zu einer drehfelderzeugenden Wicklung beliebiger Strangzahl verschalten.

In der dargestellten Ausführungsform sind der Statorkern 2 und die Trägereinrichtung 5 beispielhaft jeweils aus zwei Komponenten aufgebaut. Für den Zusammenbau des Stators 1 werden die Wicklung 3, der Statorkern 2 und die Trägereinrichtung 5 ineinander verschachtelt angeordnet. Die Komponenten sind nach Zusammenbau koaxial zueinander ausgerichtet an der gemeinsamen Mittelachse M. Die hier beispielhaft zweiteilige Trägereinrichtung 5 ist axial versetzt zu den anderen Komponenten angeordnet und bildet die innerste und äußerste Komponente des Stators 1. Es handelt sich um einen inneren Ring und einen äußeren Ring, die jeweils mit Nuten zum formschlüssigen Eingriff mit den Leiterstäben ausgebildet sind.

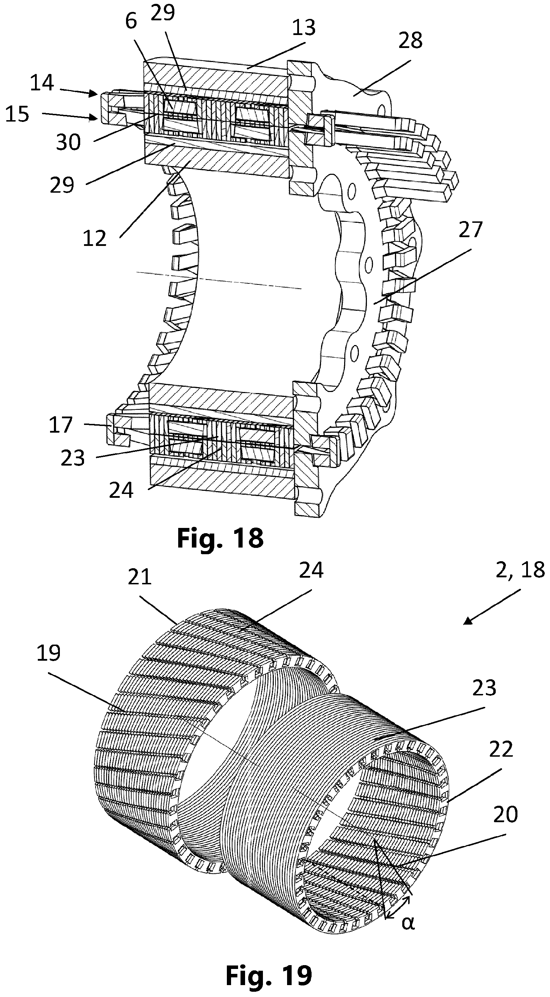

Der hier beispielhaft zweiteilige Statorkern 2 ist mit zwei schraubenförmig gegeneinander verdrehten Statorblechpaketen 18 gebildet, worauf in Bezug auf Fig. 19 weiter im Detail eingegangen wird.

Der Statorkern 2 und die Trägereinrichtung 5 können bei weiteren Ausführungsformen jeweils auch einteilig oder mit mehr als zwei Teilen ausgeführt werden.

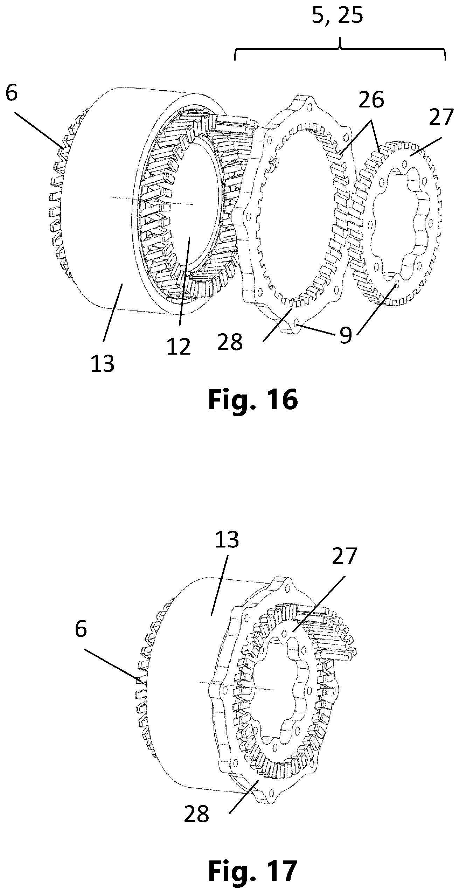

Fig. 16 zeigt eine Explosionsdarstellung einer Radialfluss-Doppelrotormaschine 10 gemäß einer weiterer Ausführungsform.

Die Radialfluss-Doppelrotormaschine 10 weist hier im Wesentlichen gleiche Komponenten auf, wie in Bezug auf Fig. 15 und 4 ausgeführt. An der linken Seite der Figur sind im zusammengebauten Zustand der Statorkern 2, die Wicklung 3, der erste Rotor 12 und der zweite Rotor 13 dargestellt.

Die rechts dargestellte Trägereinrichtung 5 ist ebenfalls zweiteilig ausgeführt und unterscheidet sich durch die Ausgestaltung des jeweils ringförmigen inneren Trägerelements 27 und äußeren Trägerelements 28. Die Trägerelemente 27, 28 sind hier mit Trägernuten 26 ausgestattet. Diese sind bei dem äußeren Trägerelement 28 am inneren Umfang und bei dem inneren Trägerelement 27 am äußeren Umfang zum Eingriff mit den Leiterstäben 6 der Wicklung 3 vorgesehen.

Die Trägernuten 26 sind dazu entsprechend dem schraubenförmigen Verlauf der Leiterstäbe bzw. dessen Steigung axial angewinkelt ausgebildet, so dass sie mit den Leiterstäben 6 der Wicklung 3 in Eingriff gebracht werden können.

Die Trägerelemente 27, 28 sind bevorzugt aus einem leitenden Metall hergestellt, besonders bevorzugt aus einer Aluminiumlegierung. Die zweiteilige Ausführung der Trägerelemente 27, 28 ermöglich es, dass die Trägernuten 26 in der Herstellung für eine mechanische bzw. spanende Bearbeitung leicht zugänglich sind.

Das innere Trägerelement 27 und das äußere Trägerelement 28 sind jeweils umlaufend mit mehreren Bohrungen 9 zur Befestigung mit der Basis 11 versehen. Die Bohrungen 9 sind hier beispielhaft entlang eines Lochkreises gleichmäßig am Umfang verteilt angeordnet. Die einzelnen Bohrungen 9 befinden sich etwas außerhalb des Hauptkörpers der Trägerelemente und die Trägerelemente 27, 28 bilden daher an dem jeweils der Wicklung abgewandten Umfang eine Sternform aus. Selbstverständlich sind andere Verteilungen der Bohrungen 9 wie auch andere Arten von Befestigungsmittel für die Verbindung zur Basis 11 denkbar.

Fig. 17 zeigt eine perspektivische Darstellung einer Radialfluss-Doppelrotormaschine 10 gemäß Fig. 16 im montierten Zustand.

Die Trägereinrichtung 5 wird über die Bohrungen 9 beispielsweise in einem Maschinengehäuse (nicht abgebildet) als Basis 11 befestigt und führt so das Drehmoment zum mechanisch festgelegten Teil der Radialfluss-Doppelrotormaschine 10. Auf diese Weise kann das durch die Radialfluss-Doppelrotormaschine 10 erzeugte Drehmoment effektiv abgestützt werden. Die Befestigung der Trägereinrichtung 5 wird über entsprechende Befestigungsmittel (nicht abgebildet), beispielsweise Schrauben, realisiert.

Die Leiterstäbe 6 der Wicklung 3 erstrecken sich axial an beiden Seiten bis außerhalb des Statorkerns 2 und des ersten und zweiten Rotors 12,13. Die schraubenförmig angeordneten Leiterstäbe 6 der radial inneren und äußeren Lage sind jeweils außerhalb des Statorkerns 2 miteinander verbunden.

Die Trägerelemente 27, 28 sind hier im Eingriff mit den Leiterstäben 6 der Wicklung 3 dargestellt. Es ist ersichtlich, dass in jeder Trägernut 26 ein Leiterstab 6 platziert ist, sodass alle Leiterstäbe formschlüssig mit der Trägereinrichtung gekoppelt sind. Somit kann ein über die Wicklung 3 abgestütztes Drehmoment über die Trägereinrichtung 5 an der an den Bohrungen 9 befestigten Basis 11 abgestützt werden.

Fig. 18 zeigt eine perspektivische Längsschnittdarstellung einer Radialfluss-Doppelrotormaschine 10 gemäß einer noch weiteren Ausführungsform.

Diese Ausführungsform entspricht im Wesentlichen dem Zusammenbau einer Radialfluss-Doppelrotormaschine 10 gemäß Fig. 14, auf deren Komponenten nachfolgend im Einzelnen weiter eingegangen wird.

Der Statorkern 2 weist ein inneres Teilpaket 23 und ein äu-ßeres Teilpaket 24 auf. Die Teilpakete 23, 24 verlaufen ringförmig zwischen dem ersten und zweiten Rotor 12,13. Aufgrund der Schnittdarstellung ist es auch, möglich die inneren und äußeren Lagen 14, 15 der innerhalb der Teilpakete 23,24 verlaufenden Leiterstäbe 6 zu sehen.

Bei der dargestellten Radialfluss-Doppelrotormaschine 10 handelt es sich um eine sogenannte "jochlose" Ausführung bei der das Joch zwischen zwei Zähnen nicht im funktionsrelevanten magnetischen Fluss liegt. Zwischen den Leiterstäben 6 verläuft somit zwar ein Statorjoch 38, welches aber lediglich dem mechanischen Zusammenhalt des Statorblechpakets 18 dient. Entsprechend dünn kann eine radiale Jochdicke gestaltet werden, welche in der dargestellten Ausführungsform beispielhaft etwa 10% der gesamten radialen Statordicke beträgt. Mit der vergleichsweise geringen Jochdicke wird zusätzlich unerwünschter magnetischer Streufluss im Joch reduziert. Bei weiteren Ausführungsformen kann zu diesem Zweck die radiale Jochdicke weniger als 30%, vorzugsweise weniger als 20%, besonders bevorzugt weniger als 10% der gesamten radialen Statordicke betragen.

Die Trägereinrichtung 5 weist auch hier ein inneres Trägerelement 27 und ein äußeres Trägerelement 28 auf. Die Trägerelemente 27,28 sind hier gut erkennbar axial versetzt zu dem Stator 5 und den Rotoren 12,13 angeordnet. Ferner ist wenigstens abschnittsweise der formschlüssige Eingriff der Trägerelemente 27,28 mit den Leiterstäben 6 der inneren und äußeren Lagen 14, 15 erkennbar.

Ferner ist hier gut zu erkennen, dass die Leiterstäbe 6 der inneren und äußeren Lagen 14,15 an den Leiterstabenden 16 über ein radial angeordnetes Leiterstabstück 17 verbunden sind. Die Verbindung ist vorzugsweise als stoffschlüssige Verbindung realisiert, beispielsweise durch Laserstrahlschweißen.

Im Schnitt sind ferner die Oberflächenmagnete der Rotoren 12, 13 zu erkennen. Der erste Rotor 12 hat auf seiner äußeren Umfangsfläche mehrere Permanentmagnete montiert. Der zweiter Rotor 13 hat auf seiner inneren Umfangsfläche mehrere Permanentmagnete montiert.

Eine besonders vorteilhafte Ausführungsform ergibt sich, wenn die Rotoren aus weichmagnetischem Vollmaterial und mit oberflächenmontierten Permanentmagneten ausgeführt sind. In dieser Ausführung können die Rotoren sehr kostengünstig gefertigt und ein hoher Wirkungsgrad erreicht werden.

Fig. 19 zeigt eine Explosionsdarstellung des Statorblechpakets 18 des Statorkerns 2.

Das Statorblechpaket 18 des Statorkerns 2 weist, wie bereits erwähnt, ein inneres Teilpaket 23 und ein äußeres Teilpaket 24 auf. Dies dient der einfacheren Herstellung der gegensätzlich zueinander verdrehten Statornuten 19 mit gleichen zueinander verdreht gestapelten und an den gleichen Stellen mit Ausnehmungen versehenen inneren und äußeren Statorblechen 21, 22.

Bei weiteren Ausführungsformen können die Statorbleche auch einteilig ausgeführt sein, sodass eine Vielzahl unterschiedlich geformter Statorbleche mit unterschiedlich angeordneten Ausnehmungen vorgesehen und in der zur Ausbildung der Statornuten nötigen Reihenfolge gestapelt sind. Bei noch weiteren Ausführungsformen sind auch komplett einteilige Statorkerne 2 denkbar, die beispielsweise additiv gefertigt werden können.

Bei der dargestellten zweiteiligen Ausführung ist ein Innendurchmesser des äußeren Teilpakets 24 nahezu gleich mit dem Außendurchmesser des inneren Teilpakets 23. Dies ermöglicht es, das innere Teilpaket 23 koaxial innerhalb des äußeren Teilpakets 24 anzuordnen.

Die Teilpakete 23,24 sind aus einzelnen aufeinander gestapelten ringförmigen Statorblechen 21,22 aufgebaut. Die Statorbleche 21 des äußeren Teilpakets 24 sind mit auf dem äußeren Umfang verteilt positionierten Ausnehmungen zur Ausbildung der äußeren Statornuten 19 gefertigt. Die Statorbleche 22 des inneren Teilpakets 23 sind mit auf dem inneren Umfang verteilt positionierten Ausnehmungen zur Ausbildung der inneren Statornuten 20 gefertigt. Beispielsweise ist eine Fertigung derartiger Statorbleche durch Stanzen aufgrund der Kantengüte und sehr geringen Herstellungskosten vorteilhaft.

Die inneren und äußeren Statornuten 19,20 beschreiben zueinander mit gleicher Steigung entgegengesetzt verlaufende Schraubenlinien, welche durch den eingezeichneten überstrichenen Winkel der Statornuten α charakterisiert werden. Der überstrichene Winkel der Statornuten α lässt sich aus dem Winkel zwischen der Position derselben Statornut auf einer axialen Seite des Statorkerns 2 und auf der anderen axialen Seite des Statorkerns 2 in Bezug auf die Mittelachse M definieren.

Die Statornuten 19,20 sind hier beispielhaft als T-Nuten mit einer rechteckigen Ausnehmung mit verjüngter Öffnung ausgebildet. Diese sind insbesondere zur formschlüssigen Aufnahme von Leiterstäben mit rechteckigem Querschnitt vorgesehen. Selbstverständlich kann die Geometrie der Ausnehmungen bzw. Statornuten an die Leitergeometrie angepasst werden. Denkbar wären dazu auch andere Querschnittsformen.

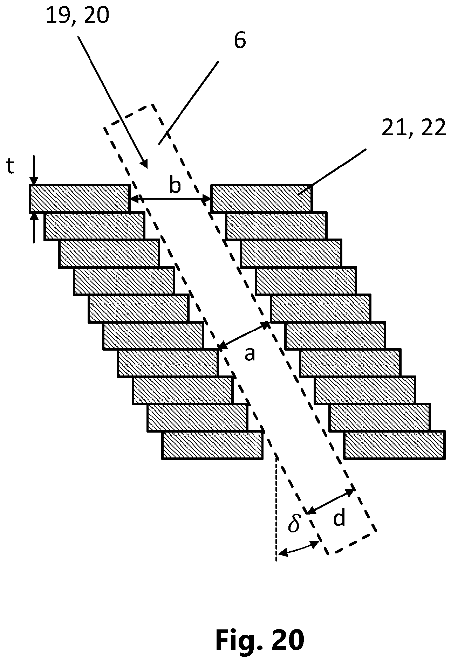

Fig. 20 zeigt eine schematische Längsschnittdarstellung einer Statornut 19, 20.

Die nutzbare bzw. durchgängige lichte Breite a der Statornuten 19,20 innerhalb des Statorblechpakets 18 ist im Wesentlichen gleich der Breite der innerhalb des Statorkerns 2 aufgenommenen Leiterstäbe 6 ausgebildet.

Die Statorbleche 21, 22 weisen gerade, insbesondere gestanzte, Kanten auf. Aufgrund des Versatzes der Bleche zueinander ist eine Breite b der für die Statornuten 19, 20 vorgesehenen Ausnehmungen um einen durch die Steigung δ der Schraubenform des Verlaufs und die Blechstärke t vorbestimmten Betrag größer als die Breite d der Leiterstäbe 6 ausgebildet.

In Fig. 20 ist ein Leiterstab 6 mit gestrichelten Linien in der Statornut 19, 20 schematisch eingezeichnet, wobei die durchgängige lichte Breite a der Statornut 19, 20 zur Bereitstellung einer Spielpassung geringfügig größer als die Breite d des Leiterstabs 6 und die Breite a der Ausnehmung im Statorblech 21, 22 wiederum deutlich größer als die lichte Breite b ausgebildet ist.

Die Blechstärke t und der Anstellwinkel δ der Steigung des Nutverlaufs stellen bei geraden, beispielsweise gestanzten, Blechkanten einen merklichen Einflussfaktor für den Unterschied zwischen der Breite b der Ausnehmung und der lichten Breite a des nutzbaren Durchgangs innerhalb der Nut dar. Der Unterschied kommt zustande, da der Steigungswinkel einerseits und die treppenförmige Stufigkeit des Blechpakets andererseits auszugleichen ist.

Eine Mindestgröße der Breite a der Ausnehmung für den Grenzfall unendlich dünner Bleche, das heißt einer reinen Betrachtung des Steigungswinkels δ des Leiterstabs, wäre hierbei

$$b = 1/\cos(\delta) * d.$$

Um einerseits zusätzlich die tatsächlich vorhandene Blechdicke zu kompensieren und andererseits eine Spielpassung bereitzustellen, welche das Einführen der Leiterstäbe erlaubt, ist die Breite b der Ausnehmung tatsächlich noch größer vorgesehen.

Die Breite b der Ausnehmungen gemäß Fig. 20 ist derart bemessen, dass eine durch den Versatz zwischen den Ausnehmungen der Statorbleche verringerte lichte Breite a der Statornuten 19, 20 eine vorbestimmte Spielpassung mit der Breite d eines in die Statornut einzuführenden Leiterstabs 6 bildet, der Kontakt aber dennoch eng genug ist, um zur gleichmäßig verteilten Kraftübertragung bzw. Drehmomentabstützung zwischen Statorbleckpaket und Wicklung zu dienen. Eine derartige Bemessung ist unter anderem dadurch ermöglicht, dass einerseits jedes Statorblech gleich mit hoher Kantengüte ausgebildet und mit gleichem Versatz verdreht ist, und andererseits in jeder Statornut 19,20 lediglich ein einzelner Leiterstab 6 platziert wird, dessen Maße konstant sind.

Insbesondere handelt es sich in der dargestellten Ausführungsform bei dem Leiterstab 6 um einen Rechteckstab mit mehreren Millimetern Kantenlänge bzw. Breite, beispielsweise im Bereich von 2 mm bis 6 mm, insbesondere im Bereich von 3 mm bis 5 mm. Vorzugsweise kann es sich um ein Rechteckprofil von 5 mm x 3 mm handeln.

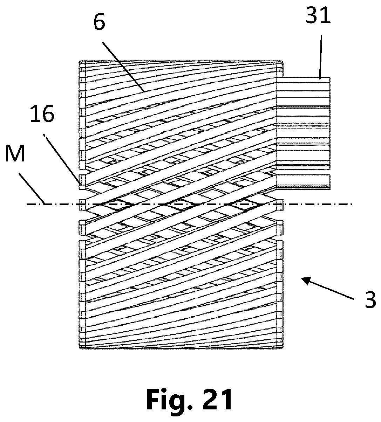

Fig. 21 zeigt eine Draufsicht einer Wicklung 3.

Gut zu erkennen ist in dieser Ansicht die exakt radiale Ausrichtung der Leiterstäbe an jeder Stelle ihres schraubenförmigen Verlaufs, welche in der dargestellten Perspektive im Bereich der Mittelachse M fluchtet. Die Leiterstabenden 16 bilden jeweils den Verbindungspunkt zwischen der inneren und äußeren radialen Lage 14, 15.

In der dargestellten Ausführungsform weist die Wicklung beispielhaft insgesamt zwölf Anschlusskontakte 31 auf. Bei dreisträngiger Verschaltung ist vorzugsweise ein dreiphasiger Betrieb vorgesehen. Die Wicklung ist jedoch in fachmännisch bekannter Weise auf andere Verschaltungen zu einer drehfelderzeugenden Wicklung beliebiger Strangzahl anpassbar.

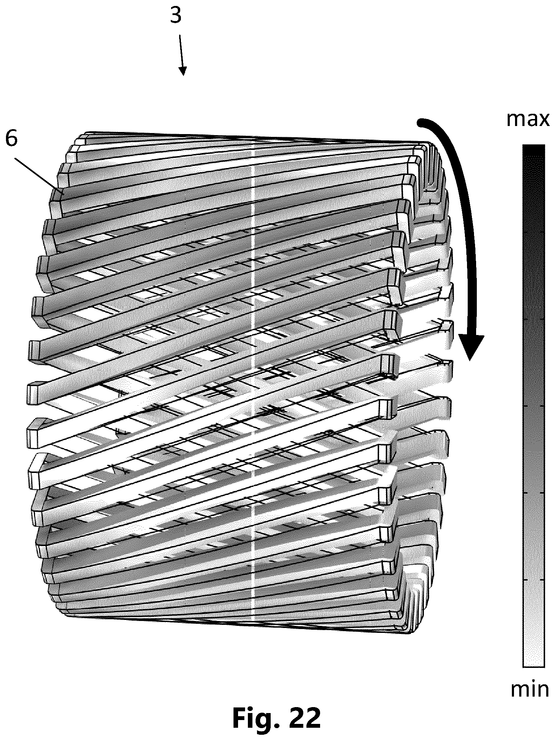

Fig. 22 zeigt eine perspektivische Darstellung einer FEM Simulation einer Wicklung 3 unter Last.

Es handelt sich hierbei mit zu Simulationszwecken geringfügigen Vereinfachungen im Wesentlichen um die in Fig. 7 dargestellte Wicklungsgeometrie. Die dargestellte Skala betrifft die Spannungen innerhalb der Wicklung, wobei es sich beispielhaft im Falle eines Rechteckprofils der Leiterstäbe 6 von 5 mm x 3 mm um eine Skala von 0 MPa bis 30 MPa handeln kann.

Die Leiterstabenden sind in diesem Beispiel durch einen überstrichenen Winkel der Leiterstäbe β > 0 definiert, das heißt schraubenförmig angeordnet und ausgebildet bzw. entsprechend tordiert geformt. An dem axialen Ende, an welchem die Trägereinrichtung eingreift, ist ein mit dickem Pfeil eingezeichnetes maximales Drehmoment der entsprechend dimensionierten Radialfluss-Doppelrotormaschine 10 aufgetragen, wobei es sich beispielhaft im Falle eines Rechteckprofils der Leiterstäbe 6 von 5 mm x 3 mm um etwa 5000 Nm handeln kann.

Erkennbar verteilen sich die Spannungen innerhalb der Wicklung aufgrund der Schraubenliniengeometrie sehr homogen. Trotz eingestellter starker Überhöhung ist kaum eine Verformung zu erkennen. Aufgrund dieser Ausführung sind somit Spannungsspitzen und damit auch die Verformung deutlich reduziert.

Durch die stabwerkartige Struktur kann bei Fixierung eines axial zugänglichen Wicklungsendes somit ein hohes Drehmoment von der Wicklung 3 selbsttragend aufgenommen werden, ohne unzulässig große Verformungen und/oder Spannungszustände hervorzurufen. Das ist insbesondere damit zu begründen, dass in dem Stabwerk die Leiterstäbe 6 bei Beaufschlagung mit Tangentialkraft vorwiegend Zug- und Druckspannungen aufnehmen.

Gegenüber Ausführungen mit achsparallelen, geraden Leitern können die mechanischen Spannungen so signifikant gesenkt werden.

Fig. 23 zeigt eine perspektivische Darstellung eines Vergleichsmodells mit gerader Ausführung und axialem Verlauf der Leiterstäbe 6 unter Last.

Im Vergleich zu Fig. 22 ist aufgrund der geraden Ausführung und des axialen Verlaufs der Leiterstäbe ein auf die in Fig. 22 links dargestellte Seite konzentrierter Spannungsverlauf und eine aus der lokal hohen Spannung resultierende starke Verformung der Leiterstäbe mit großer Auslenkung an der in Fig. 23 rechts dargestellten Seite erkennbar. Es ist hier eine gleiche Spannungsskala und gleiche Überhöhung der Verformung wie in Fig. 22 eingestellt, was die Auswirkung der unterschiedlichen strukturellen Anordnungen auf die Torsionssteifigkeit erkennen lässt.

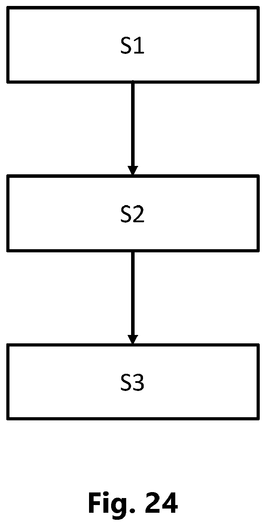

Fig. 24 zeigt ein Ablaufdiagramm eines Verfahrens zur Herstellung eines Stators 1.

Das Verfahren umfasst einen ersten Schritt des Bereitstellens S1 eines Statorkerns 2 mit jeweils eine Schraubenlinie beschreibenden radial außen liegenden Statornuten 19 und jeweils eine Schraubenlinie mit entgegengesetzter Windungsrichtung beschreibenden radial innen liegenden Statornuten 20. Ein weiterer Schritt betrifft das Einführen S2 von einzelnen Leiterstäben 6 den Schraubenlinien folgend durch die inneren und äußeren Statornuten 19, 20. Die Leiterstäbe werden dabei insbesondere in axialer Richtung eingeführt. Des weiteren ist ein Schritt des Verbindens S3 der in die inneren und äußeren Statornuten eingeführten Leiterstäbe 6 an den Leiterstabenden 16 zur Ausbildung von Leiterschleifen vorgesehen.

Bezugszeichenliste

| | |
|---|---|
| 1 | Stator |
| 2 | Statorkern |
| 3 | Wicklung |
| 4 | axiales Ende |
| 5 | Trägereinrichtung |
| 6 | Leiterstab |
| 7 | erste Schenkel |
| 8 | zweite Schenkel |
| 9 | Bohrung |
| 10 | Radialfluss-Doppelrotormaschine |
| 11 | Basis |
| 12 | erster Rotor / Innenrotor |
| 13 | zweiter Rotor / Außerotor |
| 14 | radial äußere Lage |
| 15 | radial innere Lage |
| 16 | Leiterstabenden |
| 17 | Leiterstabstück |
| 18 | Statorblechpaket |
| 19,20 | Statornuten |
| 21,22 | Statorbleche |
| 23 | inneres Teilpaket |
| 24 | äußeres Teilpaket |
| 25 | Trägerelement |
| 26 | Trägernuten |
| 27 | inneres Trägerelement |
| 28 | äußeres Trägerelement |
| 29 | Permanentmagnet |
| 30 | axiale Segment |
| 31 | diagonale Kante |
| 32,33 | vorbestimmtes Winkelsegment |
| 34,35 | Feld |
| 36 | Jochdicke |
| 37 | tangentiale Breite |
| 38 | Statorjoch |
| 100 | Doppelrotor |
| 102,103 | ringförmige Grundkörper |
| $\alpha$ | überstrichener Winkel Statornuten |
| $\beta$ | überstrichener Winkel Leiterstäbe |
| $\gamma$ | Verdrehwinkel |
| $\delta$ | Steigung |
| $\varepsilon$ | vorbestimmter Schrägungswinkel |
| $\theta$ | Anstellwinkel |
| $\phi$ | resultierender Gesamtschrägungswinkel |
| a | lichte Breite |
| b | Breite der Ausnehmung |
| d | Breite eines Leiterstabs |

M      Mittelachse
t      Blechstärke

**Patentansprüche**

1. Radialfluss-Doppelrotormaschine (10), insbesondere für einen Radnabenantrieb,

   mit einem Stator (1), der einen Statorkern (2) und eine darin aufgenommene torsionssteife Wicklung (3) aufweist, wobei in einem radial inneren Teil des Stators (1) die Leiterstäbe (6) der torsionssteifen Wicklung (3) in einem ersten Drehsinn schraubenförmig verlaufen und in einem radial äußeren Teil des Stators (1) die Leiterstäbe (6) der torsionssteifen Wicklung (3) in einem entgegengesetzten zweiten Drehsinn schraubenförmig verlaufen;
   mit einem Doppelrotor (100), der einen Innenrotor (12) und einen Außenrotor (13) aufweist, wobei der Innenrotor (12) und der Außenrotor (13) jeweils einen ringförmigen Grundkörper (102, 103), der zur Flussführung ausgelegt ist, und eine gemeinsame Mittelachse (M) aufweisen,
   wobei an dem ringförmigen Grundkörper (102, 103) jeweils eine Mehrzahl von Permanentmagneten (29) befestigt und jedem Permanentmagnet (29) im Querschnitt ein vorbestimmtes Winkelsegment (32, 33) des ringförmigen Grundkörpers (102, 103) zugeordnet ist,
   wobei die Permanentmagnete (29) derart ausgebildet und an dem jeweiligen ringförmigen Grundkörper (102, 103) angeordnet sind, dass sich das vorbestimmte Winkelsegment (32, 33) im axialen Verlauf in Umfangsrichtung verschiebt, so dass die Permanentmagnete (29) ein zu der Mittelachse (M) schräg verlaufendes Feld (34, 35) erzeugen, wobei ein Feld (34) des Innenrotors (12) in einer ersten Richtung schräg verläuft, die an dem ersten Drehsinn orientiert ist, und wobei ein Feld (35) des Außenrotors (13) in einer zweiten Richtung schräg verläuft, die an dem zweiten Drehsinn orientiert ist.

2. Radialfluss-Doppelrotormaschine (10) nach Anspruch 1, **dadurch gekennzeichnet,** **dass** der ringförmige Grundkörper (102, 103) aus Vollmaterial gefertigt ist.

3. Radialfluss-Doppelrotormaschine (10) nach einem der vorstehenden Ansprüche, **dadurch gekennzeichnet,** **dass** die Permanentmagnete (29) in einem vorbestimmten Schrägungswinkel ($\varepsilon$) relativ zu der axialen Richtung der Mittelachse (M) auf dem ringförmigen Grundkörper (102, 103) angeordnet sind.

4. Radialfluss-Doppelrotormaschine (10) nach einem der vorstehenden Ansprüche, **dadurch gekennzeichnet,** **dass** die Permanentmagnete (29) jeweils in mehrere axiale Segmente (30) geteilt ausgebildet sind, wobei jedem axialen Segment (30) ein zu einem benachbarten axialen Segment (30) um einen Anstellwinkel ($\theta$) um die Mittelachse (M) verschobenes Winkelsegment (32, 33) zugeordnet ist, wobei sich ein resultierender Gesamtschrägungswinkel ($\phi$) in Umfangsrichtung aus dem Anstellwinkel ($\theta$) ergibt.

5. Radialfluss-Doppelrotormaschine (10) nach Anspruch 4, **dadurch gekennzeichnet,** **dass** bei einer vorbestimmten Anzahl von n axialen Segmenten (30) pro Permanentmagnet (29) sich der resultierende Gesamtschrägungswinkel ($\phi$) in Umfangsrichtung ergibt aus dem Anstellwinkel ($\theta$) mit der Beziehung, $\phi = n * \theta$.

6. Radialfluss-Doppelrotormaschine (10) nach Anspruch 4 oder 5, **dadurch gekennzeichnet,** **dass** die Permanentmagnete (29) jeweils in zwei axiale Segmente (30) geteilt ausgebildet sind.

7. Radialfluss-Doppelrotormaschine (10) nach Anspruch 3, **dadurch gekennzeichnet,** **dass** die Permanentmagnete (29) mit einer Kante entlang des vorbestimmten Schrägungswinkels ($\varepsilon$) ausgerichtet sind.

8. Radialfluss-Doppelrotormaschine (10) nach Anspruch 7, **dadurch gekennzeichnet,** **dass** die Permanentmagnete (29) eine schräge Parallelogrammform aufweisen.

9. Radialfluss-Doppelrotormaschine (10) nach einem der vorstehenden Ansprüche, **dadurch gekennzeichnet,** **dass** die Wicklung (3) in dem radial inneren Teil des Stators (1) eine radial innere Lage (15) von schraubenförmig angeordneten Leiterstäben (6) und in dem radial äußeren Teil des Stators (1) eine radial äußere Lage (14) von entgegengesetzt schraubenförmig angeordneten Leiterstäben (6) aufweist.

10. Radialfluss-Doppelrotormaschine (10) nach einem der vorstehenden Ansprüche, **dadurch gekennzeichnet,** **dass** der Statorkern (2) ein Statorblechpaket (18) mit dem Wicklungsverlauf entsprechend schraubenförmig verlaufenden Statornuten (19, 20) enthält, wobei innere Statornuten (20) des radial inneren Teils des Stators (1) gemäß dem ersten Drehsinn und äußere Statornuten (19) des radial äußeren Teils des Stators (1) gemäß dem zweiten Drehsinn zueinander gegensätzlich verlaufen.

**11.** Radialfluss-Doppelrotormaschine (10) nach Anspruch 10, **dadurch gekennzeichnet, dass** das Statorblechpaket (18) ein inneres Teilpaket (23) mit radial inneren Statornuten (20) und ein äußeres Teilpaket (24) mit radial äußeren Statornuten (19) enthält, wobei die Statorbleche (22) des inneren Teilpakets (23) mit einer jeweils gleichen Geometrie und die Statorbleche (21) des äußeren Teilpakets (24) mit einer jeweils gleichen Geometrie ausgeführt sind, und wobei die Statorbleche (22) des inneren Teilpakets (23) gemäß dem ersten Drehsinn der Leiterstäbe (6) und die Statorbleche (21) des äußeren Teilpakets (24) gemäß dem zweiten Drehsinn der Leiterstäbe (6) zueinander gegensätzlich um einen vorbestimmten Verdrehwinkel ($\gamma$) um die Mittelachse (M) zueinander verdreht gestapelt sind.

**12.** Radialfluss-Doppelrotormaschine (10) nach Anspruch 11, **dadurch gekennzeichnet, dass** der resultierende Gesamtschrägungswinkel ($\phi$) in Umfangsrichtung der Permanentmagnete (29) des Innenrotors (12) in einem Bereich von 20% bis 40%, bevorzugt 25% bis 35%, besonders bevorzugt 28% bis 32%, des Verdrehwinkels ($\gamma$) der Statorbleche (22) des inneren Teilpakets (23) beträgt und/oder der resultierende Gesamtschrägungswinkel ($\phi$) in Umfangsrichtung der Permanentmagnete (29) des Außenrotors (13) in einem Bereich von 20% bis 40%, bevorzugt 25% bis 35%, besonders bevorzugt 28% bis 32% des Verdrehwinkels ($\gamma$) der Statorbleche (21) des äußeren Teilpakets (24) beträgt.

**13.** Radialfluss-Doppelrotormaschine (10) nach einem der vorstehenden Ansprüche, **dadurch gekennzeichnet, dass** die Permanentmagnete (29) des Innenrotors (12) und des Außenrotors (13) eine vorbestimmte tangentiale Breite (37) aufweisen, wobei der Statorkern (2) eine radiale Jochdicke (36) aufweist, welche im Bereich von 5% bis 25%, bevorzugt 10% bis 20%, besonders bevorzugt 12,5% bis 17,5% einer tangentialen Polbreite beträgt.

**Claims**

**1.** Radial flux double-rotor machine (10), in particular for a wheel hub drive,

comprising a stator (1), having a stator core (2) and a torsionally stiff winding (3) accommodated therein, the conductor bars (6) of the torsionally stiff winding (3) extending helically in a first direction of rotation in a radially inner part of the stator (1) and the conductor bars (6) of the torsionally stiff winding (3) extending helically in an opposite, second direction of rotation in a radially outer part of the stator (1);
comprising a double rotor (100) having an inner rotor (12) and an outer rotor (13), the inner rotor (12) and the outer rotor (13) each having an annular base body (102, 103), configured for flux guidance, and having a shared central axis (M),
wherein a plurality of permanent magnets (29) are fastened to each annular base body (102, 103) and, in cross section, a predetermined angular segment (32, 33) of the annular base body (102, 103) is assigned to each permanent magnet (29),
wherein the permanent magnets (29) are formed and arranged on the associated annular base body (102, 103) in such a way that the predetermined angular segment (32, 33) in the axial progression is displaced in the circumferential direction, in such a way that the permanent magnets (29) generate a field (34, 35) extending obliquely with respect to the central axis (M), a field (34) of the inner rotor (12) extending obliquely in a first direction orientated in the first direction of rotation, and a field (35) of the outer rotor (13) extending obliquely in a second direction orientated in the second direction of rotation.

**2.** Radial flux double-rotor machine (10) according to claim 1, **characterised in that** the annular base body (102, 103) is made of solid material.

**3.** Radial flux double-rotor machine (10) according to either of the preceding claims, **characterised in that** the permanent magnets (29) are arranged on the annular base body (102, 103) at a predetermined angle of inclination ($\varepsilon$) to the axial direction of the central axis (M).

**4.** Radial flux double-rotor machine (10) according to any of the preceding claims, **characterised in that** the permanent magnets (29) are each formed divided into a plurality of axial segments (30), each axial segment (30) being assigned an angular segment (32, 33) displaced around the central axis (M) by an adjustment angle ($\theta$) from an adjacent axial segment (30), the adjustment angle ($\theta$) resulting in a resultant total angle of inclination ($\phi$) in the circumferential direction.

**5.** Radial flux double-rotor machine (10) according to claim 4, **characterised in that**, for a predetermined number n of axial segments (30) per permanent magnet (29), the resultant total angle of inclination ($\phi$) in the circumferential direction is determined from the adjustment angle ($\theta$) by the relationship $\phi = n * \theta$.

6. Radial flux double-rotor machine (10) according to either claim 4 or claim 5,
**characterised**
**in that** the permanent magnets (29) are each formed divided into two axial segments (30).

7. Radial flux double-rotor machine (10) according to claim 3,
**characterised**
**in that** the permanent magnets (29) are orientated with an edge along the predetermined angle of inclination ($\varepsilon$).

8. Radial flux double-rotor machine (10) according to claim 7,
**characterised**
**in that** the permanent magnets (29) have an oblique parallelogram shape.

9. Radial flux double-rotor machine (10) according to any of the preceding claims,
**characterised**
**in that** the winding (3) has a radially inner layer (15) of helically arranged conductor bars (6) in the radially inner part of the stator (1) and a radially outer layer (14) of oppositely helically arranged conductor bars (6) in the radially outer part of the stator (1).

10. Radial flux double-rotor machine (10) according to any of the preceding claims,
**characterised**
**in that** the stator core (2) contains a stator lamination stack (18) having stator slots (19, 20) extending helically in accordance with the winding progression, inner stator slots (20) of the radially inner part of the stator (1) extending in the first direction of rotation, and outer stator slots (19) of the radially outer part of the stator (1) extending in the second direction of rotation, in opposite directions to one another.

11. Radial flux double-rotor machine (10) according to claim 10,
**characterised**
**in that** the stator lamination stack (18) contains an inner sub-stack (23) having radially inner stator slots (20) and an outer sub-stack (24) having radially outer stator slots (19), the stator laminations (22) of the inner sub-stack (23) being configured each with the same geometry and the stator laminations (21) of the outer sub-stack (24) being configured each with the same geometry, and the stator laminations (22) of the inner sub-stack (23), in accordance with the first direction of rotation of the conductor bars (6), and the stator laminations (21) of the outer sub-stack (24), in accordance with the second direction of rotation of the conductor bars (6), being stacked twisted relative to one another in opposite directions through a predetermined twist angle ($\gamma$) about the central axis (M).

12. Radial flux double-rotor machine (10) according to claim 11,
**characterised**
**in that** the resultant total angle of inclination ($\phi$) in the circumferential direction of the permanent magnets (29) of the inner rotor (12) is in a range of 20% to 40%, preferably 25% to 35%, particularly preferably 28% to 32%, of the twist angle ($\gamma$) of the stator laminations (22) of the inner sub-stack (23), and/or the resultant total angle of inclination ($\phi$) in the circumferential direction of the permanent magnets (29) of the outer rotor (13) is in a range of 20% to 40%, preferably 25% to 35%, particularly preferably 28% to 32%, of the twist angle ($\gamma$) of the stator laminations (21) of the outer sub-stack (24).

13. Radial flux double-rotor machine (10) according to any of the preceding claims,
**characterised**
**in that** the permanent magnets (29) of the inner rotor (12) and outer rotor (13) have a predetermined tangential width (37), the stator core (2) having a radial yoke thickness (36) in the range of 5% to 25%, preferably 10% to 20%, particularly preferably 12.5% to 17.5%, of a tangential pole width.

**Revendications**

1. Machine à double rotor à flux radial (10), en particulier pour un entraînement de moyeu de roue,

comprenant un stator (1) qui présente un noyau de stator (2) et un enroulement résistant à la torsion (3) qui y est logé, les barres conductrices (6) de l'enroulement résistant à la torsion (3) s'étendant en hélice dans un premier sens de rotation dans une partie radialement intérieure du stator (1) et les barres conductrices (6) de l'enroulement résistant à la torsion (3) s'étendent en hélice dans un deuxième sens de rotation opposé dans une partie radialement extérieure du stator (1) ;
comprenant un double rotor (100) qui présente un rotor intérieur (12) et un rotor extérieur (13), le rotor intérieur (12) et le rotor extérieur (13) présentant chacun un corps de base annulaire (102, 103) conçu pour guider le flux et un axe central commun (M),
dans lequel une pluralité d'aimants permanents (29) sont fixés sur chaque corps de base annulaire (102, 103) et un segment angulaire prédéterminé (32, 33) du corps de base annulaire (102, 103) est associé à chaque aimant permanent (29) dans la section transversale,

dans lequel les aimants permanents (29) sont conçus et disposés sur le corps de base annulaire respectif (102, 103) de telle sorte que le segment angulaire prédéterminé (32, 33) se déplace dans la direction circonférentielle sur l'extension axiale, de sorte que les aimants permanents (29) génèrent un champ (34, 35) s'étendant obliquement par rapport à l'axe central (M), un champ (34) du rotor intérieur (12) s'étendant obliquement dans une première direction orientée selon le premier sens de rotation, et un champ (35) du rotor extérieur (13) s'étendant obliquement dans une deuxième direction orientée selon le deuxième sens de rotation.

2. Machine à double rotor à flux radial (10) selon la revendication 1,
   **caractérisée en ce**
   **que** le corps de base annulaire (102, 103) est fabriqué à partir d'un matériau plein.

3. Machine à double rotor à flux radial (10) selon l'une des revendications précédentes,
   **caractérisée en ce**
   **que** les aimants permanents (29) sont disposés sur le corps de base annulaire (102, 103) selon un angle d'inclinaison prédéterminé (ε) par rapport à la direction axiale de l'axe central (M).

4. Machine à double rotor à flux radial (10) selon l'une des revendications précédentes,
   **caractérisée en ce**
   **que** les aimants permanents (29) sont chacun divisés en plusieurs segments axiaux (30), chaque segment axial (30) étant associé à un segment angulaire (32, 33) décalé par rapport à un segment axial adjacent (30) d'un angle d'incidence (θ) autour de l'axe central (M), un angle d'inclinaison total résultant (φ) dans la direction circonférentielle étant obtenu à partir de l'angle d'incidence (θ).

5. Machine à double rotor à flux radial (10) selon la revendication 4,
   **caractérisée en ce**
   **que**, pour un nombre prédéterminé de n segments axiaux (30) par aimant permanent (29), l'angle d'inclinaison total résultant (φ) dans la direction circonférentielle est obtenu à partir de l'angle d'incidence (θ) par la relation $\phi = n * \theta$.

6. Machine à double rotor à flux radial (10) selon la revendication 4 ou 5,
   **caractérisée en ce**
   **que** les aimants permanents (29) sont chacun divisés en deux segments axiaux (30).

7. Machine à double rotor à flux radial (10) selon la revendication 3,
   **caractérisée en ce**
   **que** les aimants permanents (29) sont alignés avec un bord le long de l'angle d'inclinaison prédéterminé (ε).

8. Machine à double rotor à flux radial (10) selon la revendication 7,
   **caractérisée en ce**
   **que** les aimants permanents (29) présentent une forme de parallélogramme incliné.

9. Machine à double rotor à flux radial (10) selon l'une des revendications précédentes,
   **caractérisée en ce**
   **que** l'enroulement (3) présente, dans la partie radialement intérieure du stator (1), une couche radialement intérieure (15) de barres conductrices (6) disposées en hélice et, dans la partie radialement extérieure du stator (1), une couche radialement extérieure (14) de barres conductrices (6) disposées en hélice en sens opposé.

10. Machine à double rotor à flux radial (10) selon l'une des revendications précédentes,
    **caractérisée en ce**
    **que** le noyau de stator (2) contient un paquet de tôles de stator (18) avec des encoches de stator (19, 20) présentant une extension en hélice correspondant à celle de l'enroulement, des encoches de stator intérieures (20) de la partie radialement intérieure du stator (1) s'étendant selon le premier sens de rotation, et des encoches de stator extérieures (19) de la partie radialement extérieure du stator (1) s'étendant selon le deuxième sens de rotation, de manière opposée les unes aux autres.

11. Machine à double rotor à flux radial (10) selon la revendication 10,
    **caractérisée en ce**
    **que** le paquet de tôles de stator (18) contient un paquet partiel intérieur (23) avec des encoches de stator radialement intérieures (20) et un paquet partiel extérieur (24) avec des encoches de stator radialement extérieures (19), les tôles de stator (22) du paquet partiel intérieur (23) étant réalisées chacune avec une géométrie identique et les tôles de stator (21) du paquet partiel extérieur (24) étant réalisées chacune avec une géométrie identique, et les tôles de stator (22) du paquet partiel intérieur (23) s'étendant selon le premier sens de rotation des barres conductrices (6) et les tôles de stator (21) du paquet partiel extérieur (24) étant empilées en étant tournées les unes par rapport aux autres d'un angle de rotation prédéterminé (γ) autour de l'axe central (M) selon le deuxième sens de rotation des barres conductrices (6), de manière opposée les unes aux autres.

**12.** Machine à double rotor à flux radial (10) selon la revendication 11, **caractérisée en ce que** l'angle d'inclinaison total résultant ($\phi$) dans la direction circonférentielle des aimants permanents (29) du rotor intérieur (12) est compris dans une plage de 20 % à 40 %, de préférence de 25 % à 35 %, de manière particulièrement préférée de 28 % à 32 %, de l'angle de rotation ($\gamma$) des tôles de stator (22) du paquet partiel intérieur (23) et/ou que l'angle d'inclinaison total résultant ($\phi$) dans la direction circonférentielle des aimants permanents (29) du rotor extérieur (13) est compris dans une plage de 20 % à 40 %, de préférence de 25 % à 35 %, de manière particulièrement préférée de 28 % à 32 % de l'angle de rotation ($\gamma$) des tôles de stator (21) du paquet partiel extérieur (24).

**13.** Machine à double rotor à flux radial (10) selon l'une des revendications précédentes, **caractérisée en ce que** les aimants permanents (29) du rotor intérieur (12) et du rotor extérieur (13) présentent une largeur tangentielle prédéterminée (37), le noyau de stator (2) présentant une épaisseur radiale de culasse (36) comprise entre 5 % et 25 %, de préférence entre 10 % et 20 %, de manière particulièrement préférée entre 12,5 % et 17,5 % d'une largeur polaire tangentielle.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11A**　　　**Fig. 11B**　　　**Fig. 11C**

**Fig. 12**

**Fig. 13**

10

13

30

12

1

3

2, 18

5, 25

11

29

**Fig. 14**

1

3

6

2, 18

5, 25

M

**Fig. 15**

5, 25

6

26

27

12

28

9

13

**Fig. 16**

13

27

6

28

**Fig. 17**

**Fig. 18**

**Fig. 19**

**Fig. 20**

**Fig. 21**

3

6

max

min

**Fig. 22**

**Fig. 23**

**Fig. 24**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015226105 A1
- EP 2528206 A1
- DE 102013206593 A1
- EP 1879283 B1
- JP 2018082600 B
- WO 2004004098 A1
- DE 102010055030 A1
- US 7557486 B2